(19)

Europäisches
Patentamt
European
Patent Office
Office européen
des brevets

(11) **EP 4 481 850 A1**

(12) **EUROPEAN PATENT APPLICATION**
published in accordance with Art. 153(4) EPC

(43) Date of publication:
**25.12.2024  Bulletin 2024/52**

(21) Application number: **23756674.0**

(22) Date of filing: **17.02.2023**

(51) International Patent Classification (IPC):
$H01M\ 4/36^{(2006.01)}$        $H01M\ 4/133^{(2010.01)}$
$H01M\ 4/134^{(2010.01)}$       $H01M\ 4/583^{(2010.01)}$
$H01M\ 4/587^{(2010.01)}$       $H01M\ 4/48^{(2010.01)}$
$H01M\ 4/46^{(2006.01)}$        $H01M\ 10/052^{(2010.01)}$
$H01M\ 4/02^{(2006.01)}$

(52) Cooperative Patent Classification (CPC):
C01B 33/18; H01M 4/02; H01M 4/133; H01M 4/134;
H01M 4/36; H01M 4/38; H01M 4/46; H01M 4/48;
H01M 4/583; H01M 4/587; H01M 10/052;
Y02E 60/10

(86) International application number:
**PCT/KR2023/002329**

(87) International publication number:
**WO 2023/158262 (24.08.2023 Gazette 2023/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.02.2022  KR 20220021106**

(71) Applicant: **Daejoo Electronic Materials Co., Ltd.
Siheung-si, Gyeonggi-do 15094 (KR)**

(72) Inventors:
• **JEON, Young Min
  Siheung-si, Gyeonggi-do 15094 (KR)**
• **LIM, Jong Chan
  Siheung-si, Gyeonggi-do 15094 (KR)**

(74) Representative: **HGF
HGF Limited
1 City Walk
Leeds LS11 9DX (GB)**

(54) **SILICON-CARBON MIXTURE, PREPARATION METHOD THEREFOR, AND ANODE ACTIVE MATERIAL AND LITHIUM SECONDARY BATTERY WHICH COMPRISE SAME**

(57)    The present invention relates to a silicon-carbon mixture and an anode active material comprising same. The silicon-carbon mixture comprises a first composite comprising first silicon particles and a first carbon, and a second composite comprising second silicon particles, a magnesium compound and a second carbon. The molar ratio (O/Si) of oxygen (O) atoms to silicon (Si) atoms in the silicon-carbon mixture satisfies a specific range such that, if the silicon-carbon mixture is applied to an anode active material, the discharge capacity, initial efficiency and cycle capacity retention of a lithium secondary battery can be improved simultaneously.

Processed by Luminess, 75001 PARIS (FR)

**Description**

**Technical Field**

The present invention relates to a silicon-carbon mixture, to a process for preparing the same, and to a negative electrode active material and a lithium secondary battery comprising the same.

**Background Art**

In recent years, as electronic devices become smaller, lighter, thinner, and more portable in tandem with the development of the information and communication industry, the demand for a high energy density of batteries used as power sources for these electronic devices is increasing. A lithium secondary battery is a battery that can best meet this demand, and research on small batteries using the same, as well as the application thereof to large electronic devices such as automobiles and power storage systems, is being actively conducted.

Carbon materials are widely used as a negative electrode active material for such a lithium secondary battery. Silicon-based negative electrode active materials are being studied in order to further enhance the capacity of batteries. Since the theoretical capacity of silicon (4,199 mAh/g) is greater than that of graphite (372 mAh/g) by 10 times or more, a significant enhancement in the battery capacity is expected.

The reaction scheme when lithium is intercalated into silicon is, for example, as follows:

$$[\text{Reaction Scheme 1}] \qquad 22\text{Li} + 5\text{Si} = \text{Li}_{22}\text{Si}_5$$

In a silicon-based negative electrode active material according to the above reaction scheme, an alloy containing up to 4.4 lithium atoms per silicon atom with a high capacity is formed. However, in most silicon-based negative electrode active materials, volume expansion of up to 300% is induced by the intercalation of lithium, which destroys the negative electrode, making it difficult to exhibit high cycle characteristics.

In addition, this volume change may cause cracks on the surface of the negative electrode active material, and an ionic material may be formed inside the negative electrode active material, thereby causing the negative electrode active material to be electrically detached from the current collector. This electrical detachment phenomenon may significantly reduce the capacity retention rate of a battery.

In order to solve this problem, Japanese Patent No. 4393610 discloses a negative electrode active material in which silicon and carbon are mechanically processed to form a composite, and the surface of the silicon particles is coated with a carbon layer using a chemical vapor deposition (CVD) method.

In addition, Japanese Laid-open Patent Publication No. 2016-502253 discloses a negative electrode active material comprising porous silicon-based particles and carbon particles, wherein the carbon particles comprise fine carbon particles and coarse-grained carbon particles having different average particle diameters.

However, although these prior art documents relate to negative electrode active materials containing silicon and carbon, they have a limit to suppressing the volume expansion and contraction during charging and discharging. There may be a problem in that the capacity retention rate is significantly deteriorated upon cycles of thousands or more for a long period of time, thereby deteriorating reliability.

[Prior art documents]

[Patent documents]

   (Patent Document 1) Japanese Patent No. 4393610
   (Patent Document 2) Japanese Laid-open Patent Publication No. 2016-502253
   (Patent Document 3) Korean Laid-open Patent Publication No. 2018-0106485

Disclosure of Invention

Technical Problem

An object of the present invention is to provide a silicon-carbon mixture, which comprises a first composite comprising first silicon particles and first carbon, and a second composite comprising second silicon particles, a magnesium compound, and second carbon, wherein the molar ratio (O/Si) of oxygen (O) atoms to silicon (Si) atoms in the silicon-carbon mixture satisfies a specific range, so that it is capable of enhancing the performance of a lithium secondary battery when applied to a negative electrode active material.

Another object of the present invention is to provide a process for preparing the silicon-carbon mixture.

Still another object of the present invention is to provide a negative electrode active material comprising the silicon-carbon mixture and a lithium secondary battery comprising the same.

## Solution to Problem

The present invention provides a silicon-carbon mixture, which comprises a first composite and a second composite, wherein the first composite comprises first silicon particles and first carbon, the second composite comprises second silicon particles, a magnesium compound, and second carbon, and the molar ratio (O/Si) of oxygen (O) atoms to silicon (Si) atoms in the silicon-carbon mixture is 0.01 to 0.40.

In addition, the present invention provides a process for preparing the silicon-carbon mixture, which comprises a first step of obtaining a first composite comprising first silicon particles and first carbon; a second step of obtaining a second composite comprising second silicon particles, a magnesium compound, and second carbon; and a third step of mixing the first composite and the second composite.

In addition, the present invention provides a negative electrode active material comprising the silicon-carbon mixture.

Further, the present invention provides a lithium secondary battery comprising the negative electrode active material.

## Advantageous Effects of Invention

According to the embodiment, it is possible to provide a silicon-carbon mixture, which comprises a first composite comprising first silicon particles and first carbon, and a second composite comprising second silicon particles, a magnesium compound, and second carbon, wherein the molar ratio (O/Si) of oxygen (O) atoms to silicon (Si) atoms in the silicon-carbon mixture satisfies a specific range, which makes it possible to achieve a lithium secondary battery having balanced performance of excellent discharge capacity, initial efficiency, and capacity retention rate upon cycles.

In particular, the content and porosity of carbon can be easily controlled while the above molar ratio (O/Si) of oxygen (O) atoms to silicon (Si) atoms in the silicon-carbon mixture is satisfied. As a result, an excellent capacity retention rate can be maintained even upon cycles of thousands or more for a long period of time, whereby it is possible to further enhance reliability.

In addition, the process according to the embodiment has an advantage in that mass production is possible through a continuous process with minimized steps.

## Best Mode for Carrying Out the Invention

The present invention is not limited to what is disclosed below. Rather, it may be modified in various forms as long as the gist of the invention is not altered.

In this specification, when a part is referred to as "comprising" an element, it is to be understood that the part may comprise other elements as well, unless otherwise indicated.

In addition, all numbers and expressions related to the quantities of components, reaction conditions, and the like used herein are to be understood as being modified by the term "about," unless otherwise indicated.

## [Silicon-carbon mixture]

The silicon-carbon mixture according to an embodiment comprises a first composite and a second composite, wherein the first composite comprises first silicon particles and first carbon, the second composite comprises second silicon particles, a magnesium compound, and second carbon, and the molar ratio (O/Si) of oxygen (O) atoms to silicon (Si) atoms in the silicon-carbon mixture is 0.01 to 0.40.

As the silicon-carbon mixture comprises at least two composites comprising a first composite comprising first silicon particles and first carbon and a second composite comprising second silicon particles, a magnesium compound, and second carbon, and the molar ratio (O/Si) of oxygen (O) atoms to silicon (Si) atoms in the silicon-carbon mixture satisfies a specific range, it is possible to achieve a silicon-carbon mixture with a desired structure and physical properties and to enhance all of the discharge capacity, initial efficiency, and capacity retention rate upon cycles of a lithium secondary battery when it is applied to a negative electrode active material thereof.

In particular, according to various embodiments, the content of each component contained in the first composite and in the second composite and their mixing ranges can be adjusted to optimal ranges required for enhancing the performance of a lithium secondary battery. In the manufacturing process, the etching conditions and carbon coating conditions can be adjusted in various ways, whereby it is possible to optimize the physical properties of the silicon-carbon mixture such as specific surface area, density, and porosity. Thus, it is possible to further enhance the performance of a lithium secondary battery and to further enhance reliability.

The specific structure, components and contents, and physical properties of each of the first composite and the second composite contained in the silicon-carbon mixture are as described below.

According to an embodiment, the weight ratio of the first composite and the second composite may be 90: 10 to 50:50, preferably, 90: 10 to 60:40, more preferably, 90: 10 to 70:30.

If the weight ratio of the first composite and the second composite satisfies the above range, it may be easier to achieve the desired effect, and, especially, a lithium secondary battery having well-balanced characteristics of excellent initial capacity and cycle characteristics can be provided.

In addition, as the silicon-carbon mixture according to an embodiment comprises the first composite and the second composite as uniformly mixed in the above range, it is possible to achieve a lithium secondary battery with desired characteristics for the uses thereof by adjusting physical properties such as the size and porosity of silicon particles, the content of magnesium, the specific surface area, porosity, and thermal expansion rate of the final silicon-carbon mixture, and the like.

If the weight ratio of the first composite and the second composite is outside the above range, e.g., if the content of the second composite is too small, or if the content of the first composite is too large, the content of an inactive magnesium compound contained in the silicon-carbon mixture is reduced. Thus, when it is applied to a lithium secondary battery, the effect of mitigating the volume expansion of silicon particles during charging and discharging may decrease. As a result, the cycle characteristics of a lithium secondary battery may be deteriorated.

Meanwhile, if the weight ratio of the first composite and the second composite is outside the above range, e.g., if the content of the first composite is too small, or if the content of the second composite is too large, the content of a magnesium compound in the silicon-carbon mixture is excessively large. Thus, the initial capacity and initial efficiency of a lithium secondary battery may be deteriorated.

The molar ratio (O/Si) of oxygen (O) atoms to silicon (Si) atoms in the silicon-carbon mixture may be preferably 0.01 to 0.40, more preferably, 0.03 to 0.35, even more preferably, 0.03 to 0.30, most preferably, 0.03 to 0.25. As the silicon-carbon mixture is applied to a negative electrode active material, the content of silicon particles as an active material may be increased, thereby enhancing the capacity retention rate, discharge capacity, and initial efficiency of a lithium secondary battery at the same time. In particular, if the structure and porosity of pores are controlled, while the molar ratio (O/Si) of oxygen (O) atoms to silicon (Si) atoms in the silicon-carbon mixture is satisfied, an excellent capacity retention rate can be maintained even after cycles of thousands or more for a long period of time, resulting in significant advantages of enhanced reliability.

If the molar ratio (O/Si) of oxygen (O) atoms to silicon (Si) atoms in the silicon-carbon mixture is less than the above range, its manufacture is not easy due to a problem in the process. If the molar ratio (O/Si) of oxygen (O) atoms to silicon (Si) atoms in the silicon-carbon mixture exceeds the above range, the desired effect may be reduced.

In addition, the molar ratio (Mg/Si) of magnesium (Mg) atoms to silicon (Si) atoms in the silicon-carbon mixture may be 0.001 to 0.10, preferably, 0.001 to 0.07, more preferably, 0.002 to 0.05, most preferably, 0.002 to 0.03.

If the molar ratio (Mg/Si) of magnesium (Mg) atoms to silicon (Si) atoms in the silicon-carbon mixture satisfies the above range, the resistance is reduced when lithium is detached and intercalated, so that the discharge capacity, initial efficiency, and capacity retention rate after cycles of a lithium secondary battery can be further enhanced.

The content of magnesium (Mg) in the silicon-carbon mixture may be 0.1% by weight to 15.0% by weight, preferably, 0.1% by weight to 10.0% by weight, more preferably, 0.1% by weight to 8.0% by weight, based on the total weight of the silicon-carbon mixture.

If the content of magnesium (Mg) in the silicon-carbon mixture is equal to, or greater than, the above lower limit, the initial efficiency of a lithium secondary battery can be enhanced. If it is equal to, or less than, the above upper limit, it may be advantageous in terms of the effect of enhanced charge and discharge capacity and cycle characteristics of a lithium secondary battery and handling safety.

The content of oxygen (O) in the silicon-carbon mixture may be 1% by weight to 12% by weight, preferably, 1% by weight to 8% by weight, more preferably, 1% by weight to 7% by weight, even more preferably, 1% by weight to 6% by weight, based on the total weight of the silicon-carbon mixture.

If the content of oxygen (O) in the silicon-carbon mixture is less than the above range, the degree of expansion is increased during the charging of a lithium secondary battery, which deteriorates the cycle characteristics. In addition, if the content of oxygen (O) in the silicon-carbon mixture exceeds the above range, when the silicon-carbon mixture is used as a negative electrode active material, there may be a concern that an irreversible reaction with lithium increases, which deteriorates the initial charge and discharge efficiency, it may be readily delaminated from the negative electrode current collector, and the charge and discharge cycle of a lithium secondary battery is deteriorated.

The content of silicon (Si) in the silicon-carbon mixture may be 35% by weight to 80% by weight, preferably, 40% by weight to 80% by weight, more preferably, 45% by weight to 80% by weight, even more preferably, 50% by weight to 80% by weight, based on the total weight of the silicon-carbon mixture.

If the content of silicon (Si) in the silicon-carbon mixture is less than the above range, the amount of an active material for the occlusion and release of lithium is small, which may reduce the charge and discharge capacity of a lithium secondary battery. On the other hand, if it exceeds the above range, the charging and discharge capacity of a lithium secondary battery may be increased, whereas the expansion and contraction of the electrode during charging and discharging may be excessively increased, and the negative electrode active material powder may be further pulverized, which may deteriorate the cycle characteristics of the lithium secondary battery.

The content of carbon (C) in the silicon-carbon mixture may be 15% by weight to 50% by weight, preferably, 20% by weight to 50% by weight, more preferably, 25% by weight to 50% by weight, based on the total weight of the silicon-carbon mixture.

If the content of carbon (C) in the silicon-carbon mixture is less than the above range, there is a concern that the effect of enhanced conductivity may be insignificant, and the electrode lifespan characteristics of a lithium secondary battery may be deteriorated. In addition, if the content of carbon (C) in the silicon-carbon mixture exceeds the above range, the discharge capacity of a lithium secondary battery may decrease, and the bulk density may decrease, so that the discharge capacity per unit volume may be deteriorated.

Meanwhile, the silicon-carbon mixture may further comprise silicon oxide ($SiO_x$, $0.1 < x \leq 2$). In $SiO_x$, x may be: $0.4 \leq x \leq 2$, preferably, $0.6 \leq x \leq 1.6$, more preferably, $0.6 \leq x \leq 1.2$.

As the oxygen ratio of the silicon-carbon mixture decreases, a higher charge and discharge capacity can be obtained, whereas a volume expansion ratio upon charging may increase. Meanwhile, as the oxygen ratio increases, the volume expansion ratio may decrease, whereas the charge and discharge capacity may decrease.

If x satisfies the range in $SiO_x$, the expansion and contraction of a lithium secondary battery upon charging and discharging can be suppressed, thereby suppressing the negative electrode active material from being delaminated from the negative electrode current collector, and sufficient charge and discharge capacity of a lithium secondary battery can be secured, thereby maintaining high charge and discharge rate characteristics.

The silicon oxide may be employed in an amount of 0.1% by weight to 5% by weight based on the total weight of the silicon-carbon mixture.

If the content of the silicon oxide is outside the above range, the silicon oxide may react with lithium to form strong alkali compounds such as $Li_4SiO_4$ and $Li_2O$. The silicon oxide is preferably amorphous. If the silicon oxide is amorphous, pulverization can be prevented or mitigated even when a volume change of silicon particles takes place during intercalation and detachment of lithium, and a side reaction between silicon and an electrolyte can be prevented or reduced.

Meanwhile, the silicon particles contained in the silicon-carbon mixture may comprise first silicon particles and second silicon particles as described below.

In addition, the silicon-carbon mixture may comprise a silicon aggregate in which silicon particles are combined with each other. The silicon aggregate is as described below.

When the first silicon particles and the second silicon particles in the silicon-carbon mixture are subjected to X-ray diffraction analysis (converted from the results of X-ray diffraction analysis), the average value of the crystallite size of the first silicon particle and the second silicon particle may be 1 nm to 15 nm, preferably, 1 nm to 10 nm, more preferably, 2 nm to 6 nm, even more preferably, 2 nm to 4 nm. In such a case, the performance of a lithium secondary battery such as discharge capacity, initial efficiency, or cycle lifespan characteristics may be further enhanced.

The silicon-carbon mixture may have an average particle diameter ($D_{50}$) of 2 $\mu$m to 15 $\mu$m, preferably, 2 $\mu$m to 10 $\mu$m, more preferably, 2 $\mu$m to 6 $\mu$m.

In addition, the silicon-carbon mixture may have a minimum particle diameter, Dmin, of 0.3 $\mu$m or less and a maximum particle diameter, Dmax, of 8 $\mu$m to 30 $\mu$m. If Dmin and Dmax of the silicon-carbon mixture each satisfy the above ranges, the specific surface area of the silicon-carbon mixture is reduced, whereby the initial efficiency and cycle characteristics of a lithium secondary battery can be further enhanced.

Meanwhile, the silicon-carbon mixture may have a density of 1.8 $g/cm^3$ to 2.5 $g/cm^3$, preferably, 2.0 $g/cm^3$ to 2.5 $g/cm^3$, more preferably, 2.0 $g/cm^3$ to 2.4 $g/cm^3$. If the density of the silicon-carbon mixture satisfies the above range, it may be more advantageous for achieving the effects desired in the present invention.

The silicon-carbon mixture may have a specific surface area (Brunauer-Emmett-Teller method; BET) of 2 $m^2/g$ to 50 $m^2/g$, preferably, 2 $m^2/g$ to 30 $m^2/g$, more preferably, 2 $m^2/g$ to 8 $m^2/g$. If the specific surface area of the silicon-carbon mixture is less than the above range, the charge and discharge characteristics of a lithium secondary battery may be deteriorated. If it exceeds the above range, the contact area of the silicon-carbon mixture with an electrolyte increases, so that the decomposition reaction of the electrolyte is expedited, which may cause side reactions. If the specific surface area of the silicon-carbon mixture satisfies the above range, doping and dedoping of lithium take place actively, and irreversible capacity decreases, so that excellent capacity characteristics and high rates characteristics may be achieved.

In addition, the silicon-carbon mixture may comprise pores therein. The diameters of the pores may be the same as, or different from, each other.

The pores may comprise internal pores.

The internal pores comprise inner pores (also referred to as closed pores) and open pores. At least a part of the wall of a pore may be open to form an open structure, so that it may be connected to other pores, or it may not be so.

The pores may comprise inner pores. The inner pore refers to an independent pore that is not connected to other pores because the entire wall of the pore is closed to form a closed structure.

The pores may comprise open pores.

The silicon-carbon mixture may have a porosity of 0.1% to 50%, preferably, 0.2% to 30%, more preferably, 0.2% to 25%. The pores may be used interchangeably with voids. The porosity may refer to internal porosity.

If the porosity of the silicon-carbon mixture satisfies the above range, a buffering effect of volume expansion may be produced while sufficient mechanical strength is maintained.

If the porosity of the silicon-carbon mixture, that is, the internal porosity of the silicon-carbon mixture, is less than the above range, it may be difficult to control the volume expansion of a negative electrode active material during charging and discharging. If it exceeds the above range, the mechanical strength may be reduced due to a large number of pores present in the negative electrode active material, and there is a concern that the negative electrode active material may be collapsed in the process of manufacturing a lithium secondary battery, for example, during the mixing of a negative electrode active material composition (slurry) and the rolling step after coating.

If the internal porosity of the silicon-carbon mixture satisfies the above range, it is possible to obtain a buffering effect of volume expansion while sufficient mechanical strength is maintained when it is applied to a negative electrode active material of a lithium secondary battery. Thus, it is possible to minimize the problem of volume expansion attributed to the use of silicon particles, to achieve high capacity, and to enhance lifespan characteristics.

The internal pores comprise open pores on the surface of the silicon-carbon mixture and inner pores.

In the present specification, the porosity may be defined as in the following Equation 1. The porosity may refer to internal porosity.

Porosity (%) = pore volume per unit mass / (specific volume + pore volume per unit mass)        [Equation 1]

The measurement of the porosity is not particularly limited. Based on an embodiment of the present invention, for example, it may be measured with BELSORP (BET equipment) of BEL JAPAN using an adsorption gas such as nitrogen or by a mercury permeation method (Hg porosimeter).

However, it may be difficult in the present invention to measure an accurate value using an adsorption gas such as nitrogen or a mercury permeation method. This may be a case where the surface of each composite is sealed by a carbon coating of the first composite and the second composite, so that nitrogen gas does not reach the inner pores. In such a case, the internal porosity may be obtained by the sum of a value obtained by adsorption gas (BET) such as nitrogen or a mercury permeation method and the inner porosity of the following Equation 2.

$$[\text{Equation 2}]$$

$$\text{Inner porosity (\%)} = \{1 - (\text{measured density / calculated density})\} \times 100$$

In addition, in Equation 2, the measured density may be measured using helium.

In the silicon-carbon mixture, when the inner pores are closed and nitrogen gas or mercury does not reach the inner pores, the porosity measured by the nitrogen adsorption method may be considered to be close to open porosity.

### Various examples of the silicon-carbon mixture

The silicon-carbon mixture may have various structures.

Specifically, the silicon-carbon mixture may comprise a silicon-carbon mixture (1), a silicon-carbon mixture (2), and a combination thereof depending on the porosity.

Specifically, the silicon-carbon mixture (1) may be a silicon-carbon mixture comprising a small amount of pores, and the silicon-carbon mixture (2) may be a porous mixture.

In the silicon-carbon mixture according to an embodiment, the silicon-carbon mixture (1) and the silicon-carbon mixture (2) each having a controlled porosity can be obtained by adjusting the carbon coating method and the carbon coating amount. The carbon coating may be formed by a chemical thermal decomposition deposition (chemical vapor deposition (CVD)) method.

In addition, the porosity of the silicon-carbon mixture may be controlled by adjusting the etching conditions for each of the first composite and the second composite, for example, an etching solution (etchant), its concentration, etching time, and the like; and/or the carbon coating conditions and the carbon coating amount of each of the first composite and the second composite, for example, the type of carbon source, coating temperature, coating time, and the like, in the process for preparing a silicon-carbon mixture as described below. The technical significance resides in that the porosity of the silicon-carbon mixture can be optimized by this method according to the characteristics required for a lithium secondary battery.

**Silicon-carbon mixture (1)**

The silicon-carbon mixture (1) according to an embodiment may comprise a small amount of pores.

Specifically, the silicon-carbon mixture (1) may have an internal porosity of 0.1% to 10%, preferably, 0.1% to 8%, more preferably, 0.1% to 5%. The method for measuring the internal porosity is as described above.

If the internal porosity of the silicon-carbon mixture (1) satisfies the above range, it is possible to obtain a buffering effect of volume expansion while sufficient mechanical strength is maintained when it is applied to a negative electrode active material of a lithium secondary battery. Thus, it is possible to minimize the problem of volume expansion attributed to the use of silicon particles, to achieve high capacity, and to enhance lifespan characteristics.

If the internal porosity of the silicon-carbon mixture (1) is less than the above range, it may be difficult to control the volume expansion of a negative electrode active material during charging and discharging. If it exceeds the above range, the mechanical strength may be reduced due to a large number of pores present in the negative electrode active material, and there is a concern that the negative electrode active material may be collapsed in the process of manufacturing a lithium secondary battery, for example, during the mixing of a negative electrode active material composition (slurry) and the rolling step after coating.

The internal porosity of the silicon-carbon mixture (1) may be controlled by adjusting the etching conditions for each of the first composite and the second composite and the carbon coating conditions and the carbon coating amount thereof.

For example, the internal porosity of the first silicon composite obtained by etching before the carbon coating of the first composite (first-first or first-second step in the preparation process described below) may be 10% to 50%, preferably, 15% % to 50%, more preferably, 20% to 50%. However, the internal porosity of a first composite obtained by forming a first carbon inside the first silicon composite and a first carbon layer on the surface of the first silicon composite using a chemical thermal decomposition deposition method after the etching (first-third step in the preparation method described below) may be adjusted in terms of the carbon coating conditions and the carbon coating amount such that the silicon-carbon mixture (1) has an internal porosity in the above range.

That is, in the preparation process of the first composite, a large amount of internal pores present in the first silicon composite formed after the etching may be filled with carbon by carbon coating through a chemical thermal decomposition deposition method, and the amount of carbon filled in the internal pores can be adjusted to an internal porosity that satisfies the above range by controlling the carbon coating conditions and the amount of carbon coating.

The porosity of the first composite and a method for controlling it may be equally applied to the second composite and a preparation process thereof.

Meanwhile, the silicon-carbon mixture (1) may have an inner porosity of 0.1% to 6%, preferably, 0.1% to 5%, more preferably, 0.1% to 4%.

If the inner porosity of the silicon-carbon mixture (1) satisfies the above range, it is possible to obtain a buffering effect of volume expansion while sufficient mechanical strength is maintained when it is applied to a negative electrode active material of a lithium secondary battery. Thus, it is possible to minimize the problem of volume expansion attributed to the use of silicon particles, to achieve high capacity, and to enhance lifespan characteristics.

If the internal porosity and/or the inner porosity of the silicon-carbon mixture (1) each satisfy the above ranges, it is possible to maintain an excellent capacity retention rate even after cycles of thousands or more for a long period of time, resulting in significant advantages of enhanced reliability.

**Silicon-carbon mixture (2)**

The silicon-carbon mixture (2) according to an embodiment may be porous as it comprises a large amount of pores.

Specifically, the silicon-carbon mixture (2) may have an internal porosity of 4% to 20%, preferably, 6% to 20%, more preferably, 8% to 20%.

If the internal porosity of the silicon-carbon mixture (2) satisfies the above range, the volume expansion of silicon particles that may take place during the charging and discharging of a lithium secondary battery may be mitigated and suppressed through the pores.

If the internal porosity of the silicon-carbon mixture (2) is less than the above range, it may be difficult to control the volume expansion of a negative electrode active material during charging and discharging. If it exceeds the above range, the mechanical strength may be reduced due to a large number of pores present in the negative electrode active material, and the negative electrode active material may be collapsed in the process of manufacturing a lithium secondary battery, for example, during the mixing of a negative electrode active material composition (slurry) and the rolling step after coating.

Meanwhile, the silicon-carbon mixture (2) may have an inner porosity of 2% to 10%, preferably, greater than 4% to 10%, more preferably, 6% to 10%.

If the inner porosity of the silicon-carbon mixture (2) satisfies the above range, it is possible to obtain a buffering effect of volume expansion while sufficient mechanical strength is maintained when it is applied to a negative electrode active material of a lithium secondary battery. Thus, it is possible to minimize the problem of volume expansion attributed to the use of silicon particles, to achieve high capacity, and to enhance lifespan characteristics.

Since the silicon-carbon mixture (2) has a porous structure, an electrolyte easily penetrates into the silicon-carbon mixture (2), whereby the charge and discharge characteristics of a lithium secondary battery can be enhanced.

Hereinafter, a first composite and a second composite contained in the silicon-carbon mixture will be described in detail.

**<First composite>**

In the silicon-carbon mixture according to an embodiment, the first composite comprises first silicon particles and first carbon.

Specifically, the first composite may comprise first silicon particles. In addition, the first composite may comprise a first silicon aggregate in which the first silicon particles are combined with each other.

Specifically, the first composite may comprise a first silicon aggregate having a three-dimensional (3D) structure in which two or more of the first silicon particles are combined with each other. Since the first silicon particles charge lithium, the capacity of a lithium secondary battery may be decreased if the first composite does not comprise the first silicon particles. In particular, if a first silicon aggregate in which the first silicon particles are combined with each other is employed, excellent mechanical properties such as strength can be obtained, a negative electrode active material composition can be prepared with good dispersion, and a negative electrode active material composition can be applied on a current collector with excellent workability.

According to an embodiment, the first composite may comprise a first silicon composite comprising the first silicon particles and first carbon.

In addition, the first silicon aggregates may be uniformly distributed inside the first silicon composite, specifically, inside the first silicon composite, and the first silicon particles may comprise silicon particles that are not combined with each other. The first silicon particles and/or the first silicon aggregates may be uniformly distributed inside the first composite, specifically, inside the first silicon composite. In such a case, excellent electrochemical properties such as charge and discharge may be achieved.

The first composite may comprise first silicon particles, specifically, a first silicon aggregate in which the first silicon particles are combined with (or interconnected to) each other. A first carbon layer may be formed on the surface of the first silicon particle and/or the first silicon aggregate, and first carbon may be formed as it is uniformly dispersed and/or distributed between the first silicon particles.

In the present specification, the term "combined (or interconnected)" refers to a state in which silicon particles in the first composite are combined (fused) with at least one other silicon particle and connected to each other, or a structure in which the silicon particles are continuously connected (silicon aggregate).

The inside of the first composite may be more firmly coupled by the first carbon and the first carbon layer. As a result, it is possible to minimize the pulverization of the silicon-carbon mixture comprising the first composite that may be caused by a change in volume during the charging and discharging of a lithium secondary battery.

The first composite is a composite in which first silicon aggregates, in which a plurality of first silicon particles are combined with each other, are uniformly distributed in a composite whose structure is in the form of a single mass, for example, a polyhedral, spherical, or similar shape. It may be in a single composite in which first carbon and a first carbon layer comprising the first carbon surround a part or all of the surfaces of one or more of the first silicon particles or the surfaces of secondary first silicon particles (first silicon aggregates) formed by the aggregation of two or more of the first silicon particles.

In the first composite, the inside of the first silicon composite obtained after etching and before carbon coating may have a structure similar to that of a three-dimensional pomegranate (hereinafter, referred to as a pomegranate structure). In the pomegranate structure, a wall may be formed inside a core in a state in which nano-sized first silicon particles are combined with each other. In addition, internal pores may be formed as surrounded by these walls. The internal pores may be very uniformly distributed inside the first silicon composite. The internal pores may comprise inner pores and open pores.

Thereafter, a large amount of carbon may be filled in the pores by the carbon coating.

That is, since the first composite is uniformly formed in a state in which the first silicon particles are surrounded by a large amount of first carbon and a first carbon layer comprising the first carbon, there are advantages in that a passage of conductivity is sufficient to ensure high conductivity and that the addition of a carbon-based negative electrode active material can be reduced when a negative electrode is manufactured. In addition, the specific surface area of the first composite is appropriately adjusted such that the performance of a lithium secondary battery can be further enhanced.

Meanwhile, the first silicon particles may comprise crystalline particles and may have a crystallite size of 1 nm to 10 nm in an X-ray diffraction analysis (converted from X-ray diffraction analysis results).

If the crystallite size of the first silicon particles is less than the above range, it is difficult to form micropores inside the first composite, it is not possible to suppress a reduction in the Coulombic efficiency, which stands for the ratio of charge capacity to discharge capacity, and the specific surface area is too large, thereby making it impossible to prevent oxidation problems when they are handled in the atmosphere. In addition, if the crystallite size exceeds the above range, the micropores cannot adequately suppress the volume expansion of silicon particles that may take place during charging and discharging, and a reduction in the Coulombic efficiency, which stands for the ratio of charge capacity to discharge capacity, due to repeated charging and discharging cannot be suppressed.

Specifically, when the first composite according to an embodiment is subjected to an X-ray diffraction (Cu-K$\alpha$) analysis using copper as a cathode target and calculated by the Scherrer equation based on a full width at half maximum (FWHM) of the diffraction peak of Si (220) around $2\theta = 47.5°$, the first silicon particles may preferably have a crystallite size of 1 nm to 7.5 nm, more preferably, 1 nm to 6 nm.

As the crystallite size of the first silicon particles is made smaller within the above range, a denser composite can be obtained, which can enhance the strength of the matrix. Accordingly, in such a case, the performance of a lithium secondary battery such as discharge capacity, initial efficiency, or cycle lifespan characteristics may be further enhanced.

In addition, the first composite may further comprise amorphous silicon or silicon in a similar phase thereto. Although the first silicon particles have high initial efficiency and battery capacity, it is accompanied by a very complex crystal change by electrochemically absorbing, storing, and releasing lithium atoms.

Meanwhile, the molar ratio (O/Si) of oxygen (O) atoms to silicon (Si) atoms in the first composite may be 0.01 to 0.30, preferably, 0.01 to 0.25, more preferably, 0.01 to 0.20. As the first composite has a molar ratio (O/Si) of oxygen (O) atoms to silicon (Si) atoms satisfying the above range, it may be more advantageous for satisfying the desired molar ratio (O/Si) of oxygen (O) atoms to silicon (Si) atoms in the silicon-carbon mixture. When it is applied to a lithium secondary battery, it is possible to enhance the discharge capacity and initial efficiency, along with an excellent capacity retention rate.

In the first composite, the first carbon may be present on the surface of the first silicon particles. In addition, the first carbon may be present on the surface and/or inside of the first silicon aggregates contained in the first composite.

In addition, the first carbon may serve as a matrix, and the first silicon particles and/or the first silicon aggregates, along with the pores, may be dispersed in the first carbon matrix.

Specifically, the first composite may have a sea-island structure in which the first silicon particles or closed pores (v) form islands and the first carbon forms a sea. The pores comprise open pores and closed pores. The closed pores may comprise pores whose inside is not coated with the first carbon.

In the first composite, the first carbon may be present on the surface of the first silicon composite particles comprising the first silicon particles or inside the open pores.

The state in which the first silicon particles or the first carbon are uniformly dispersed is confirmed through image observation of a dark field image or a bright field image by a transmission electron microscope (TEM).

In addition, the first carbon is present on the surface of the first silicon particles or the first silicon aggregates. The first carbon may serve as a matrix, and the first silicon particles and the pores may be dispersed in the first carbon matrix.

In addition, the first composite comprises a first silicon composite and a first carbon layer on the surface thereof. The first silicon particles may be present in the first silicon composite, and the first carbon may be contained in at least a part of the inside of the first carbon layer and the first silicon composite.

In addition, according to an embodiment, the thickness of the first carbon layer or the amount of carbon may be controlled, so that it is possible to achieve appropriate electrical conductivity, as well as to prevent a deterioration of the lifespan characteristics, to thereby achieve a negative electrode active material of high capacity.

In addition, the first composite may further comprise the first silicon oxide (SiO$_x$, $0.1 < x \leq 2$) (also referred to as a first silicon oxide compound).

The first silicon oxide may be formed on the surface of the first silicon particle and/or the first silicon aggregate.

In addition, the first silicon oxide may be present uniformly distributed with the first silicon particles.

In addition, the first silicon oxide may be formed on the surface of the first silicon particles and may be uniformly distributed with the first silicon particles or the first silicon aggregates.

The first silicon oxide may be a generic term for an amorphous silicon oxide obtained by cooling and precipitation of silicon monoxide gas formed by the oxidation of metal silicon, the reduction of silicon dioxide, or heating a mixture of silicon dioxide and metal silicon.

In SiO$_x$ of the first silicon oxide, x may be: $0.4 \leq x \leq 2$, preferably, $0.6 \leq x \leq 1.6$, more preferably, $0.6 \leq x \leq 1.2$.

In the formula SiO$_x$, if the value of x is less than the above range, expansion and contraction may be increased and lifespan characteristics may be deteriorated during the charging and discharging of a lithium secondary battery. In addition, if x exceeds the above range, there may be a problem in that the initial efficiency of a lithium secondary battery is decreased as the amount of inactive oxides increases.

In addition, the first carbon may be present on the surface of the first silicon oxide (SiO$_x$, 0.1 < x ≤ 2).

Meanwhile, in general, as the ratio of oxygen decreases in a negative electrode active material that comprises silicon, the ratio of silicon particles as an active material increases, thereby increasing discharge capacity and discharge efficiency, whereas there may arise a problem in that cracks may be formed in the first composite or the silicon-carbon mixture by the volume expansion caused by the charging and discharging of the silicon particles. As a result, the cycle characteristics of a lithium secondary battery may be deteriorated. In order to solve this problem, silicon dioxide as an inert material or an inert phase may be contained in the first composite.

Specifically, since the silicon dioxide is an inert material or an inert phase, it is effective in mitigating the volume expansion caused by the charging and discharging of silicon particles. The silicon dioxide is a component for forming a matrix in the first composite, which increases the mechanical strength of the matrix of the first composite to make it more robust and is effective in suppressing the formation of cracks even during volume expansion.

Further, as the content of the silicon dioxide is optimized, it is possible to suppress a decrease in the initial capacity and initial efficiency of a lithium secondary battery and to enhance the cycle characteristics by increasing the strength of the matrix.

Specifically, according to an embodiment, the first composite may comprise the silicon dioxide in an amount of 0.3% to 6% by weight, preferably, 0.5% by weight to 6% by weight, more preferably, 0.5% by weight to 5% by weight, even more preferably, 1% by weight to 4% by weight, most preferably from 1% by weight to 3% by weight, based on the total weight of the first composite. If the content of the silicon dioxide is less than the above range, the effect of enhancing the cycle characteristics of a lithium secondary battery may be insignificant. If it exceeds the above range, it may be difficult to achieve the desired molar ratio (O/Si) of oxygen (O) atoms to silicon (Si) atoms in the first composite, and the cycle characteristics or discharge capacity of a lithium secondary battery may be deteriorated.

The content of oxygen (O) in the first composite may be 1% by weight to 12% by weight, preferably, 1% by weight to 8% by weight, more preferably, 1% by weight to 6% by weight, even more preferably, 1% by weight to 5% by weight, based on the total weight of the first composite.

If the content of oxygen (O) in the first composite is less than the above range, the degree of expansion is increased during the charging of a lithium secondary battery, which deteriorates the cycle characteristics. If the content of oxygen (O) in the first composite exceeds the above range, there may be a concern that an irreversible reaction with lithium increases, which deteriorates the initial charge and discharge efficiency, it may be readily delaminated from the negative electrode current collector, and the charge and discharge cycle of a lithium secondary battery is deteriorated.

Meanwhile, in the first composite, the content of silicon (Si) may be 35% by weight to 80% by weight, preferably, 40% by weight to 80% by weight, more preferably, 50% by weight to 80% by weight, based on the total weight of the first composite. If the content of silicon (Si) in the first composite is less than the above range, the amount of an active material for the occlusion and release of lithium is small, which may reduce the charge and discharge capacity of a lithium secondary battery. On the other hand, if it exceeds the above range, the charging and discharge capacity of a lithium secondary battery may be increased, whereas the expansion and contraction of the electrode during charging and discharging may be excessively increased, and the negative electrode active material powder may be further pulverized, which may deteriorate the cycle characteristics.

In addition, the first composite comprises a first silicon composite and a first carbon layer on the surface thereof. The first silicon particles are present in the first silicon composite, and the first carbon may be contained in the first carbon layer and inside the first silicon composite.

The content of the first carbon (C) in the first composite may be 10% by weight to 50% by weight based on the total weight of the first composite.

If the content of the first carbon (C) in the first composite is less than the above range, a sufficient effect of enhanced conductivity cannot be expected, and the electrode lifespan of a lithium secondary battery may be deteriorated. In addition, if the content of the first carbon (C) in the first composite exceeds the above range, the discharge capacity of a lithium secondary battery may decrease, and the charge and discharge capacity per unit volume may be deteriorated. Specifically, the content of the first carbon (C) may be 15% by weight to 45% by weight or 15% by weight to 40% by weight, based on the total weight of the first composite.

The content of carbon (C) contained inside the first silicon composite may be 10% by weight to 45% by weight, preferably, 10% by weight to 40% by weight, more preferably, 15% by weight to 38% by weight, based on the total weight of the first composite. If carbon is contained in the first silicon composite in the above content range, sufficient electrical conductivity may be obtained.

In addition, the content of carbon (C) contained in the first composite, particularly, the content of carbon (C) contained in the first silicon composite may be affected by porosity.

Specifically, in the first composite (1) comprising a small amount of pores, the content of carbon (C) contained inside the first silicon composite may be increased to 30% by weight to 45% by weight. In addition, in the porous first composite (2) comprising a large amount of pores, the content of carbon (C) contained inside the first silicon composite may be decreased to 10% by weight to less than 30% by weight.

As the content of carbon (C) is adjusted to the optimum ranges in this way, the porosity of the first composite may be controlled. Thus, the silicon-carbon mixture having a controlled porosity can be obtained.

In addition, the porosity of the first composite may be controlled to adjust the content of carbon (C) in the first composite to an optimal range.

This may be applied to the second composite described below in the same or similar manner.

The first carbon layer may have a thickness of 2 nm to 100 nm, preferably, 10 nm to 80 nm, more preferably, 10 nm to 60 nm, even more preferably, 10 nm to 40 nm.

If the thickness of the first carbon layer is equal to, or greater than, the above lower limit, an enhancement in conductivity may be achieved. If it is equal to, or less than, the above upper limit, a decrease in the capacity of the lithium secondary battery may be suppressed.

The average thickness of the first carbon layer may be measured by, for example, the following procedure.

First, a negative electrode active material is observed at an arbitrary magnification by a transmission electron microscope (TEM). The magnification is preferably, for example, a degree that can be confirmed with the naked eye. Subsequently, the thickness of the carbon layer is measured at arbitrary 15 points. In such an event, it is preferable to select the measurement positions at random widely as much as possible, without concentrating on a specific region. Finally, the average value of the thicknesses of the carbon layer at the 15 points is calculated.

The first carbon layer may comprise at least one selected from the group consisting of amorphous carbon, crystalline carbon, graphene, reduced graphene oxide, a carbon nanotube, and a carbon nanofiber. Specifically, it may comprise graphene. The at least one selected from the group consisting of amorphous carbon, crystalline carbon, graphene, reduced graphene oxide, a carbon nanotube, and a carbon nanofiber may be contained not only in the first carbon layer present on the surface of the first silicon composite, but also inside the first silicon composite, on the surfaces of the first silicon particles, and in the first carbon matrix.

If the first carbon layer comprises amorphous carbon, the strength of the first carbon layer is properly maintained, so that the expansion of the composite can be suppressed.

The amorphous carbon may comprise at least one selected from the group consisting of soft carbon (low-temperature calcined carbon), hard carbon, pitch carbide, mesophase pitch carbide, and calcined coke.

The raw material of pitch may be, for example, petroleum-based, coal-based, or a mixture thereof. For example, it may be coal tar pitch, petroleum pitch, organic synthetic pitch obtainable by polycondensation of condensed polycyclic aromatic hydrocarbon compounds, or organic synthetic pitch obtainable by polycondensation of heteroatom-containing condensed polycyclic aromatic hydrocarbon compounds. Specifically, the raw material of pitch may be coal tar pitch.

If the first carbon layer is formed using pitch, the conductivity of a negative electrode active material may be enhanced through a simple thermal treatment process by thermally treating and carbonizing the pitch raw material.

In addition, when the first carbon layer comprises crystalline carbon, the conductivity of a negative electrode active material may be improved. The crystalline carbon may be at least one selected from the group consisting of plate-shaped, spherical, and fibrous natural graphite and fibrous artificial graphite.

In addition, first carbon may be formed inside the first silicon composite in the same type as the first carbon layer.

Meanwhile, the first carbon layer of the first composite may comprise one or more or two or more carbon layers.

For example, the first carbon layer may have a single-layer structure of one layer or a multi-layer structure of two or more layers. If the first carbon layer is formed of two or more carbon layers, even if cracks are formed on the surface of one of the carbon layers, it is possible to maintain the state in which the carbon layers are electrically connected until the other carbon layer without cracks is completely detached.

Specifically, if the first carbon layer of the first composite comprises a multi-layer of two or more layers, it may comprise a first-first carbon layer and a first-second carbon layer.

The types of the first-first carbon layer and the first-second carbon layer are as described above. Here, the types of the first-first carbon layer and the first-second carbon layer may be different from each other.

For example, the first-first carbon layer may comprise at least one selected from the group consisting of amorphous carbon, crystalline carbon, graphene, a carbon nanotube, and a carbon nanofiber. The first-second carbon layers may comprise reduced graphene oxide (RGO). The reduced graphene oxide may be formed by partially or substantially completely reducing graphene oxide.

The first silicon composite may have an average particle diameter ($D_{50}$) of 2 $\mu$m to 15 $\mu$m, preferably, 4 $\mu$m to 10 $\mu$m, more preferably, 4 $\mu$m to 8 $\mu$m. In addition, the average particle diameter ($D_{50}$) is a value measured as a diameter-averaged particle diameter ($D_{50}$), i.e., a particle size or median diameter when the cumulative volume is 50% in particle size distribution measurement according to a laser beam diffraction method. If the average particle diameter ($D_{50}$) is less than the above range, there is a concern that the dispersibility may be deteriorated due to the aggregation of particles of the first composite during the preparation of a negative electrode active material composition (slurry) using the same. On the

other hand, if $D_{50}$ exceeds the above range, the expansion of the composite particles attributed to the charging of lithium ions becomes severe, and the binding capability between the particles of the composite and the binding capability between the particles and the current collector are deteriorated as charging and discharging are repeated, so that the lifespan characteristics may be significantly reduced. In addition, there is a concern that the activity may be deteriorated due to a decrease in the specific surface area.

Meanwhile, since the surfaces of the first silicon composite particles or the inside thereof and the pores therein may be covered by carbon coating, the specific surface area of the first silicon composite may vary significantly.

The first composite may have a specific surface area (Brunauer-Emmett-Teller method; BET) of 2 $m^2/g$ to 50 $m^2/g$, preferably, 2 $m^2/g$ to 40 $m^2/g$, more preferably, 2 $m^2/g$ to 20 $m^2/g$. If the specific surface area of the first composite is less than the above range, the charge and discharge characteristics of a lithium secondary battery may be deteriorated. If it exceeds the above range, it may be difficult to prepare a negative electrode active material composition (slurry) suitable for the application to a negative electrode current collector of a lithium secondary battery, the contact area with an electrolyte increases, and the decomposition reaction of the electrolyte may be accelerated or a side reaction of a lithium secondary battery may be caused.

The first composite may have a density of 1.8 $g/cm^3$ to 2.5 $g/cm^3$, preferably, 2.0 $g/cm^3$ to 2.5 $g/cm^3$, more preferably, 2.0 $g/cm^3$ to 2.4 $g/cm^3$, even more preferably, 2.0 $g/cm^3$ to 2.3 $g/cm^3$. The density may vary depending on the coating amount of the first carbon layer. While the amount of carbon is fixed, the greater the density within the above range, the fewer pores in the first composite. Therefore, when the silicon-carbon mixture comprising the first composite is used as a negative electrode active material, the conductivity is enhanced, and the strength of the matrix is fortified, thereby enhancing the initial efficiency and cycle lifespan characteristics. In such an event, the density may refer to particle density, density, or true density. The measurement method is as described above.

If the density of the first composite is within the above range, it is possible to minimize the cracking of a negative electrode active material by reducing the volume expansion of the negative electrode active material during charging and discharging. As a result, a deterioration of cycle characteristics can be prevented, and the impregnability of an electrolyte solution can be enhanced, so that the initial charge and discharge capacity of a lithium secondary battery can be further enhanced.

Meanwhile, the first composite may comprise pores.

In the first composite, a first composite (1) and a first composite (2) having different porosities can be obtained by adjusting the carbon coating method and the carbon coating amount. The carbon coating may be formed by a chemical thermal decomposition deposition (chemical vapor deposition (CVD)) method.

Specifically, the porosities of the first composites (1) and (2) may be controlled by adjusting the etching conditions, for example, an etching solution (etchant), its concentration, etching time, and the like; and/or the carbon coating conditions and carbon coating amount, for example, the type of carbon source, coating temperature, coating time, and the like, in the process for preparing a first composite as described below.

First composite (1)

The first composite (1) according to an embodiment may comprise a small amount of pores.

The definition and the method for measuring pores are as described above.

Specifically, the first composite (1) may have an internal porosity of 0.1% to 10%, preferably, 0.1% to 8%, more preferably, 0.1% to 5%. The method for measuring the internal porosity is as described above.

If the internal porosity of the first composite (1) satisfies the above range, it is possible to obtain a buffering effect of volume expansion while sufficient mechanical strength is maintained when it is applied to a negative electrode active material of a lithium secondary battery. Thus, it is possible to minimize the problem of volume expansion attributed to the use of silicon particles, to achieve high capacity, and to enhance lifespan characteristics.

If the internal porosity of the first composite (1) is less than the above range, it may be difficult to control the volume expansion of a negative electrode active material during charging and discharging. If it exceeds the above range, the mechanical strength may be reduced due to a large number of pores present in the negative electrode active material, and there is a concern that the negative electrode active material may be collapsed in the process of manufacturing a lithium secondary battery, for example, during the mixing of a negative electrode active material composition (slurry) and the rolling step after coating.

Meanwhile, the first composite (1) may have an inner porosity of 0.1% to 8%, preferably, 0.1% to 5%, more preferably, 0.1% to 4%.

If the inner porosity of the first composite (1) satisfies the above range, it is possible to obtain a buffering effect of volume expansion while sufficient mechanical strength is maintained when it is applied to a negative electrode active material of a lithium secondary battery. Thus, it is possible to minimize the problem of volume expansion attributed to the use of silicon particles, to achieve high capacity, and to enhance lifespan characteristics.

If the internal porosity and/or the inner porosity of the first composite (1) each satisfy the above ranges, it is possible to maintain an excellent capacity retention rate even after cycles of thousands or more for a long period of time, resulting in significant advantages of enhanced reliability.

First composite (2)

The first composite (2) according to an embodiment may be porous as it comprises a large amount of pores.

Specifically, the first composite (2) may have an internal porosity of greater than 10% to 40%, preferably, greater than 10 to 30%, more preferably, greater than 10% to 25%.

If the internal porosity of the first composite (2) satisfies the above range, the volume expansion of silicon particles that may take place during the charging and discharging of a lithium secondary battery may be mitigated and suppressed through the pores.

If the internal porosity of the first composite (2) is less than the above range, it may be difficult to control the volume expansion of a negative electrode active material during charging and discharging. If it exceeds the above range, the mechanical strength may be reduced due to a large number of pores present in the negative electrode active material, and the negative electrode active material may be collapsed in the process of manufacturing a lithium secondary battery, for example, during the mixing of a negative electrode active material composition (slurry) and the rolling step after coating.

Since the first composite (2) has a porous structure, an electrolyte easily penetrates into the first composite (2), thereby enhancing the charge and discharge characteristics of a lithium secondary battery.

Meanwhile, the first composite (2) may have an inner porosity of 5% to 35%, preferably, greater than 5% to 25%, more preferably, greater than 5% to 20%.

If the inner porosity of the first composite (2) satisfies the above range, it is possible to obtain a buffering effect of volume expansion while sufficient mechanical strength is maintained when it is applied to a negative electrode active material of a lithium secondary battery. Thus, it is possible to minimize the problem of volume expansion attributed to the use of silicon particles, to achieve high capacity, and to enhance lifespan characteristics.

**<Second composite>**

In the silicon-carbon mixture according to an embodiment, the second composite comprises second silicon particles, a magnesium compound, and second carbon.

The structure of the second composite, the second silicon particles, the second carbon, pores, other components such as silicon oxide or silicon dioxide, and the contents and physical properties thereof are the same as, or similar to, those of the first composite as described above, unless otherwise specified.

Specifically, the second composite may comprise second silicon particles. In addition, the second composite may comprise a second silicon aggregate in which the second silicon particles are combined with each other.

Specifically, the second composite may comprise a second silicon aggregate having a three-dimensional (3D) structure in which two or more of the second silicon particles are combined with each other. Since the second silicon particles charge lithium, the capacity of a lithium secondary battery may be decreased if the second silicon particles are not employed. In particular, if it comprises a second silicon aggregate in which the second silicon particles are combined with each other, excellent mechanical properties such as strength can be obtained. In addition, the silicon-carbon mixture comprising the second composite may be easily dispersed when a negative electrode active material composition is prepared with a binder and a conductive material. When the negative electrode active material composition is applied on a current collector, its workability may be excellent.

The second composite may comprise a second silicon composite comprising the second silicon particles and a magnesium compound and second carbon.

In addition, the second silicon aggregates may be uniformly distributed inside the second composite, and the second silicon particles may comprise silicon particles that are not combined with each other. The second silicon particles and/or the second silicon aggregates may be uniformly distributed inside the second composite. In such a case, excellent electrochemical properties such as charge and discharge may be achieved.

In addition, in the second silicon composite, since the second silicon particles and the magnesium compound are uniformly dispersed inside the second silicon composite and are firmly coupled with each other, it is possible to minimize the pulverization of the second composite that may be caused by a change in volume during charging and discharging. In addition, the change in volume during the occlusion and release of lithium ions is small, and cracks may not be formed in the negative electrode active material even when charging and discharging are repeated. As a result, since there is no steep decrease in the capacity with respect to the number of cycles of a lithium secondary battery, the cycle characteristics of the lithium secondary battery may be excellent.

The second silicon particles may comprise crystalline particles and may have a crystallite size of 1 nm to 10 nm in an X-ray diffraction analysis (converted from X-ray diffraction analysis results).

If the crystallite size of the second silicon particles is less than the above range, it is difficult to form micropores inside the second silicon composite, it is not possible to suppress a reduction in the Coulombic efficiency, which stands for the ratio of charge capacity to discharge capacity, and the specific surface area is too large, thereby making it impossible to prevent oxidation problems when they are handled in the atmosphere. In addition, if the crystallite size exceeds the above range, the micropores cannot adequately suppress the volume expansion of silicon particles that may take place during charging and discharging, and a reduction in the Coulombic efficiency, which stands for the ratio of charge capacity to discharge capacity, due to repeated charging and discharging cannot be suppressed.

Specifically, when the second composite according to an embodiment is subjected to an X-ray diffraction (Cu-K$\alpha$) analysis using copper as a cathode target and calculated by the Scherrer equation based on a full width at half maximum (FWHM) of the diffraction peak of Si (220) around $2\theta = 47.5°$, the silicon particles may preferably have a crystallite size of 2 nm to 8 nm, more preferably, 2 nm to 7 nm.

Meanwhile, the second composite comprises a magnesium compound.

Since the magnesium compound hardly reacts with lithium ions during the charging and discharging of a lithium secondary battery, it is possible to reduce the expansion and contraction of the electrode when lithium ions are occluded in the electrode, thereby enhancing the cycle characteristics of the lithium secondary battery. In addition, the strength of the matrix, which is a continuous phase surrounding the silicon, can be fortified by the magnesium compound.

The magnesium compound may comprise magnesium silicate, fluorine-containing magnesium compound, or a mixture thereof.

Specifically, the magnesium compound may comprise fluorine-containing magnesium compound.

The preferable characteristics of the case where the second composite comprises a fluorine-containing magnesium compound according to an embodiment will be described below.

In general, silicon particles may occlude lithium ions during the charging of a lithium secondary battery to form an alloy, which may increase the lattice constant, to thereby expand the volume. In addition, during the discharging of the lithium secondary battery, lithium ions are released to return to the original metal nanoparticles, thereby reducing the lattice constant.

The fluorine-containing magnesium compound may be considered as a zero-strain material that does not accompany a change in the crystal lattice constant while lithium ions are occluded and released. The silicon particles may be present between the fluorine-containing magnesium compound particles and may be surrounded by the fluorine-containing magnesium compound particles.

In addition, the fluorine-containing magnesium compound does not release lithium ions during the charging of a lithium secondary battery. For example, it is also an inactive material that does not occlude or release lithium ions during the charging of a lithium secondary battery.

Lithium ions are released from the second silicon particles, whereas lithium ions, which have been steeply increased during charging, are not released from the fluorine-containing magnesium compound. Thus, a matrix comprising a fluorine-containing magnesium compound does not participate in the chemical reaction of the battery, but it is expected to function as a body that suppresses the volume expansion of silicon particles during the charging of the lithium secondary battery.

The fluorine-containing magnesium compound may comprise magnesium fluoride ($MgF_2$), magnesium fluoride silicate ($MgSiF_6$), or a mixture thereof. In addition, when the magnesium fluoride is subjected to an X-ray diffraction (Cu-K$\alpha$) analysis using copper as a cathode target and calculated by the Scherrer equation based on a full width at half maximum (FWHM) of the diffraction peak of $MgF_2$ (111) around $2\theta = 40°$, $MgF_2$ may have a crystallite size of 2 nm to 35 nm, 5 nm to 25 nm, or 5 nm to 15 nm. If the crystallite size of $MgF_2$ is within the above range, it may function as a body for suppressing the volume expansion of silicon particles during the charging and discharging of a lithium secondary battery.

According to an embodiment, in an X-ray diffraction (Cu-K$\alpha$) analysis using copper corresponding to an Si (220) crystal plane of the second silicon particles as a cathode target, IB/IA as a ratio of the diffraction peak intensity (IB) corresponding to an $MgF_2$ (111) crystal plane around $2\theta = 40.4°$ to the diffraction peak intensity (IA) of Si (220) around $2\theta = 47.3°$ may be greater than 0 to 1. If IB/IA exceeds 1, there may be a problem in that the capacity of a lithium secondary battery is deteriorated.

The magnesium compound may further comprise magnesium silicate and may comprise it more in the center of the second composite.

The magnesium silicate may comprise $MgSiO_3$, $Mg_2SiO_4$, or a mixture thereof.

In particular, as the second composite comprises $MgSiO_3$, the Coulombic efficiency or capacity retention rate may be increased.

The content of the magnesium silicate may be 0% by weight to 30% by weight, 0.5% by weight to 25% by weight, or 0.5% by weight to 20% by weight, based on the total weight of the second composite.

In the second composite according to an embodiment, magnesium silicate may be converted to fluorine-containing magnesium compound by etching.

For example, some, most, or all of the magnesium silicate may be converted to fluorine-containing magnesium compound depending on the etching method or etching degree. More specifically, most of the magnesium silicate may be converted to fluorine-containing magnesium compound.

Meanwhile, the content of magnesium (Mg) in the second composite may be 1% by weight to 20% by weight, preferably, 1% by weight to 15% by weight, more preferably, 2% by weight to 10% by weight, based on the total weight of the second composite. If the content of magnesium (Mg) in the second composite is equal to, or greater than, the above lower limit, the initial efficiency of a lithium secondary battery can be enhanced. If it is equal to, or less than, the above upper limit, the charge and discharge capacity, cycle characteristics, and handling stability may be preferable.

Meanwhile, according to an embodiment, it is possible to reduce the number of oxygen atoms present on the surface of the second composite. That is, the key feature of the present invention lies in that the molar ratio (O/Si) of oxygen (O) atoms to silicon (Si) atoms may be significantly reduced.

The molar ratio (O/Si) of oxygen (O) atoms to silicon (Si) atoms in the second composite may be 0.01 to 0.50, preferably, 0.01 to 0.40, more preferably, 0.01 to 0.35. When the second composite in which the molar ratio (O/Si) of oxygen (O) atoms to silicon (Si) atoms satisfies the above range is applied to a negative electrode active material, it is possible to enhance the discharge capacity and initial efficiency while an excellent capacity retention rate is maintained.

According to an embodiment, if the molar ratio (O/Si) of oxygen (O) atoms to silicon (Si) atoms in the second composite is within the above range, expansion and contraction due to charging and discharging may be suppressed. Thus, when the silicon-carbon mixture comprising the second composite is used as a negative electrode active material, it is possible to suppress the delamination of the negative electrode active material from the negative electrode current collector. In addition, since discharge capacity can be secured, high charge and discharge rate characteristics can be maintained.

In addition, the second composite is a composite in which second silicon aggregates, in which a plurality of second silicon particles are combined with each other, are uniformly distributed in a composite whose structure is in the form of a single mass, for example, a polyhedral, spherical, or similar shape. It may be in a single composite in which second carbon, more specifically, a second carbon layer comprising the second carbon surrounds a part or all of the surfaces of one or more of the second silicon particles or the surfaces of secondary second silicon particles (silicon aggregates) formed by the aggregation of two or more of the second silicon particles.

Meanwhile, the inside of the second composite may have a structure similar to that of a three-dimensional pomegranate (hereinafter, referred to as a pomegranate structure). In the pomegranate structure, a wall may be formed inside a core in a state in which nano-sized second silicon particles and a magnesium compound, for example, magnesium silicate, fluorine-containing magnesium compound, or a mixture thereof, are combined with each other. In addition, internal pores may be formed as surrounded by these walls. The internal pores may be very uniformly distributed inside the second composite, specifically, the second silicon composite.

In the second composite, the second carbon may be present on the surface of at least one selected from the group consisting of the second silicon particles and magnesium compound contained in the second composite. In addition, the second carbon may be present on the surfaces of the second silicon aggregates contained in the second composite.

In addition, the second composite may further comprise a second silicon oxide (SiO$_x$, 0.1 < x ≤ 2) formed on the surfaces of the second silicon particles. In such a case, the second carbon may be present on the surface of the second silicon oxide (SiO$_x$, 0.1 < x ≤ 2).

In addition, the second carbon may serve as a matrix, and the second silicon particles, magnesium compound, and pores may be dispersed in the second carbon matrix.

Specifically, the second composite may have a sea-island structure in which the second silicon particles or closed pores (v) form islands and the carbon forms a sea. The pores comprise open pores and closed pores. The closed pores may comprise pores whose inside is not coated with the second carbon.

In addition, the second carbon is present on the surface of at least one selected from the group consisting of the second silicon particles and magnesium compound contained in the second silicon composite. The second carbon may serve as a matrix, and the second silicon particles, magnesium compound, and pores may be dispersed in the second carbon matrix.

In the second composite, the second carbon may be present inside and/or on the surface of the second silicon composite particle. Specifically, as the second carbon is contained inside the second carbon layer and the second silicon composite, the desired effect can be readily achieved.

For example, the second composite comprises a second silicon composite and a second carbon layer on the surface thereof. The second silicon particles and a magnesium compound are present in the second silicon composite, and the second carbon may be contained in at least a part of the inside of the second carbon layer and the second silicon composite.

In addition, according to an embodiment, the thickness of the second carbon layer or the amount of carbon may be controlled, so that it is possible to achieve appropriate electrical conductivity, as well as to prevent a deterioration of the lifespan characteristics, to thereby achieve a negative electrode active material of high capacity.

Meanwhile, since the surfaces of the second silicon composite particles or the inside thereof and the pores therein may be covered by carbon coating, the specific surface area of the second silicon composite may vary significantly.

The second composite may have a specific surface area (Brunauer-Emmett-Teller method; BET) of 2 m$^2$/g to 50 m$^2$/g, preferably, 2 m$^2$/g to 40 m$^2$/g, more preferably, 2 m$^2$/g to 20 m$^2$/g. If the specific surface area of the second composite is less than the above range, the charge and discharge characteristics of a lithium secondary battery may be deteriorated. If it exceeds the above range, it may be difficult to prepare a negative electrode active material composition (slurry) suitable for the application to a negative electrode current collector of a lithium secondary battery, the contact area with an electrolyte increases, and the decomposition reaction of the electrolyte may be accelerated or a side reaction of a lithium secondary battery may be caused.

The second composite may have a density of 1.8 g/cm$^3$ to 2.5 g/cm$^3$, preferably, 2.0 g/cm$^3$ to 2.5 g/cm$^3$, more preferably, 2.0 g/cm$^3$ to 2.4 g/cm$^3$. The density may vary depending on the coating amount of the second carbon layer. While the amount of carbon is fixed, the greater the density within the above range, the fewer pores in the second composite. Therefore, when it is used as a negative electrode active material, the conductivity is enhanced, and the strength of the matrix is fortified, thereby enhancing the initial efficiency and cycle lifespan characteristics. In such an event, the density may refer to particle density, density, or true density. The measurement method is as described above.

If the density of the second composite satisfies the above range, it is possible to prevent the deterioration of cycle characteristics of a lithium secondary battery and to enhance the impregnability of an electrolyte solution, which can enhance the initial charge and discharge capacity.

Meanwhile, in the second composite, the content of silicon (Si) may be 30% by weight to 75% by weight, preferably, 35% by weight to 75% by weight, more preferably, 40% by weight to 75% by weight, based on the total weight of the second composite. If the content of silicon (Si) in the second composite satisfies the above range, it may be more advantageous for achieving the desired effects.

If the content of silicon (Si) is less than the above range, the amount of an active material for the occlusion and release of lithium is small, which may reduce the charge and discharge capacity of a lithium secondary battery. On the other hand, if it exceeds the above range, the charging and discharge capacity of a lithium secondary battery may be increased, whereas the expansion and contraction of the electrode during charging and discharging may be excessively increased, and the negative electrode active material powder may be further atomized, which may deteriorate the cycle characteristics.

The content of oxygen (O) in the second composite may be 1% by weight to 12% by weight, preferably, 1% by weight to 8% by weight, more preferably, 1% by weight to 7% by weight, even more preferably, 1% by weight to 6% by weight, based on the total weight of the second composite.

If the content of oxygen (O) in the second composite is less than the above range, the degree of expansion is increased during the charging of a lithium secondary battery, which deteriorates the cycle characteristics. If the content of oxygen (O) in the second composite exceeds the above range, there may be a concern that an irreversible reaction with lithium increases, which deteriorates the initial charge and discharge efficiency, it may be readily delaminated from the negative electrode current collector, and the charge and discharge cycle of a lithium secondary battery is deteriorated.

The content of magnesium (Mg) in the second composite may be 1% by weight to 20% by weight, preferably, 1% by weight to 15% by weight, more preferably, 1% by weight to 12% by weight, based on the total weight of the second composite. If the content of magnesium (Mg) in the second composite is less than the above range, the initial efficiency of a lithium secondary battery may be reduced. If it exceeds the above range, there may be a problem in that the capacity of a lithium secondary battery is reduced. If the content of magnesium (Mg) in the second composite satisfies the above range, it is possible to further enhance the performance of a lithium secondary battery.

Meanwhile, according to an embodiment of the present invention, the second composite may comprise a fluoride and/or silicate containing a metal other than magnesium. The other metals may be at least one selected from the group consisting of alkali metals, alkaline earth metals, Groups 13 to 16 elements, transition metals, rare earth elements, and combinations thereof. Specific examples thereof may include Li, Ca, Sr, Ba, Y, Ti, Zr, Hf, V, Nb, Cr, Mo, W, Fe, Pb, Ru, Ir, Pd, Pt, Cu, Ag, Au, Zn, Cd, B, Al, Ga, Sn, In, Ti, Ge, P, As, Sb, Bi, S, and Se.

In addition, the second composite comprises a second silicon composite and a second carbon layer on the surface thereof. The second silicon particles and the magnesium compound are present in the second silicon composite, and the second carbon may be contained inside the second carbon layer and the second silicon composite.

The content of the second carbon (C) contained inside the second composite may be 10% by weight to 50% by weight based on the total weight of the second composite. If the content of the second carbon (C) is less than the above range, a sufficient effect of enhanced conductivity cannot be expected, and there is a concern that the electrode lifespan of the lithium secondary battery may be deteriorated. In addition, if it exceeds the above range, the discharge capacity of a lithium secondary battery may decrease and the bulk density may decrease, so that the charge and discharge capacity per unit volume may be deteriorated. Specifically, the content of the second carbon (C) may be 15% by weight to 45% by weight, preferably, 15% by weight to 40% by weight, based on the total weight of the second composite.

In addition, the content of carbon (C) contained inside the second silicon composite may be 10% by weight to 45% by weight, preferably, 10% by weight to 40% by weight, more preferably, 15% by weight to 38% by weight, based on the total weight of the second composite. If carbon is contained in the second silicon composite in the above content range, sufficient electrical conductivity may be obtained.

In addition, the content of carbon (C) contained in the second composite, particularly, the content of carbon (C) contained in the second silicon composite may be affected by porosity.

Specifically, in the second composite (1) comprising a small amount of pores, the content of carbon (C) contained inside the second silicon composite may be increased to 30% by weight to 45% by weight. In addition, in the porous second composite (2) comprising a large amount of pores, the content of carbon (C) contained inside the second silicon composite may be decreased to 10% by weight to less than 30% by weight.

The thickness of the second carbon layer may be the same as, or similar to, the thickness of the first carbon layer.

Measurement of the average thickness of the carbon layer is as described above.

The type and structure of the second carbon layer are as described for the first carbon layer.

Meanwhile, the second carbon layer of the second composite may comprise one or more or two or more carbon layers.

For example, the second carbon layer may have a single-layer structure of one layer or a multi-layer structure of two or more layers.

Specifically, if the second carbon layer of the second composite comprises a multi-layer of two or more layers, it may comprise a second-first carbon layer and a second-second carbon layer.

The second carbon layer of the second composite is as described for the first carbon layer.

Meanwhile, the second composite may have an average particle diameter ($D_{50}$) of 2 $\mu$m to 15 $\mu$m. In addition, the average particle diameter ($D_{50}$) is a value measured as a diameter-averaged particle diameter ($D_{50}$), i.e., a particle size or median diameter when the cumulative volume is 50% in particle size distribution measurement according to a laser beam diffraction method. Specifically, the average particle diameter ($D_{50}$) may be preferably 3 $\mu$m to 10 $\mu$m, more preferably 3 $\mu$m to 8 $\mu$m. If the average particle diameter ($D_{50}$) is less than the above range, there is a concern that the dispersibility may be deteriorated due to the aggregation of particles of the second composite during the preparation of a negative electrode active material composition (slurry) using the same. On the other hand, if $D_{50}$ exceeds the above range, the expansion of the composite particles due to the charging of lithium ions becomes severe, and the binding capability between the particles of the composite and the binding capability between the particles and the current collector are deteriorated as charging and discharging are repeated, so that the lifespan characteristics may be significantly reduced. In addition, there is a concern that the activity may be deteriorated due to a decrease in the specific surface area. More specifically, in view of the remarkable improvement effect of the optimization of the average particle diameter ($D_{50}$) of the second composite, the average particle diameter ($D_{50}$) of the second composite particles may be 3 $\mu$m to 6 $\mu$m.

A lithium secondary battery using the second composite in a negative electrode may further enhance its discharge capacity, initial efficiency, and capacity retention rate.

Meanwhile, the second composite may comprise pores.

In the second composite, a second composite (1) and a second composite (2) having different porosities can be obtained by adjusting the carbon coating method and the carbon coating amount. The carbon coating may be formed by a chemical thermal decomposition deposition (chemical vapor deposition (CVD)) method.

Specifically, the porosities of the second composites (1) and (2) may be controlled by adjusting the etching conditions, for example, an etching solution (etchant), its concentration, etching time, and the like; and/or the carbon coating conditions and carbon coating amount, for example, the type of carbon source, coating temperature, coating time, and the like, in the preparation process as described below.

Second composite (1)

The second composite (1) according to an embodiment may comprise a small amount of pores.

The definition and the method for measuring pores are as described above.

The internal porosity of the second composite (1) may be similar to, or the same as, the range of the internal porosity of the first composite (1).

The inner porosity of the second composite (1) may be similar to, or the same as, the range of the inner porosity of the first composite (1).

**Second composite (2)**

The second composite (2) according to an embodiment may be porous as it comprises a large amount of pores.

The internal porosity of the second composite (2) may be similar to, or the same as, the range of the internal porosity of the first composite (2).

The inner porosity of the second composite (2) may be similar to, or the same as, the range of the inner porosity of the first composite (2).

According to an embodiment, the silicon-carbon mixture, specifically, the silicon-carbon mixtures (1) and (2) having desired physical properties may each be obtained by appropriately selecting and adjusting at least one of the first composites (1) and (2) and at least one of the second composites (1) and (2).

For example, the silicon-carbon mixture may comprise the first composite (1) and the second composite (1).

Alternatively, the silicon-carbon mixture may comprise the first composite (2) and the second composite (2).

Alternatively, the silicon-carbon mixture may comprise the first composite (1) and the second composite (2).

Alternatively, the silicon-carbon mixture may comprise the first composite (2) and the second composite (1).

Alternatively, the silicon-carbon mixture may comprise the first composite (1), the first composite (2), the second composite (1), and the second composite (2).

**[Process for preparing a silicon-carbon mixture]**

The process for preparing a silicon-carbon mixture according to an embodiment may comprise a first step of obtaining a first composite comprising first silicon particles and first carbon; a second step of obtaining a second composite comprising second silicon particles, a magnesium compound, and second carbon; and a third step of mixing the first composite and the second composite.

According to the process for preparing a silicon-carbon mixture, the etching conditions and carbon coating conditions can be adjusted in various ways, whereby it is possible to variously adjust and optimize the molar ratio (O/Si) of oxygen (O) atoms to silicon (Si) atoms in the silicon-carbon mixture and the physical properties thereof such as specific surface area, density, and porosity. Thus, it is possible to further enhance the performance of a lithium secondary battery and to further enhance reliability.

In addition, the preparation process has an advantage in that mass production is possible through a continuous process with minimized steps.

First step of obtaining a first composite

First, the process for preparing a silicon-carbon mixture comprises a first step of obtaining a first composite comprising first silicon particles and first carbon.

The first step of obtaining a first composite may comprise a first-first step of etching a first silicon-based raw material powder using an etching solution containing a fluorine (F) atom-containing compound; a first-second step of obtaining a first silicon composite by filtering and drying the product obtained by the etching; and a first-third step of forming first carbon inside the first silicon composite and a first carbon layer on the surface of the first silicon composite using a chemical thermal decomposition deposition method to obtain a first composite.

The first-first step may comprise etching a first silicon-based raw material powder using an etching solution containing a fluorine (F) atom-containing compound.

The first silicon-based raw material powder may comprise a powder comprising silicon capable of reacting with lithium, for example, a powder comprising at least two of silicon, silicon oxide, and silicon dioxide.

The first silicon-based raw material powder may comprise, for example, at least one selected from silicon, silicon oxide, and silicon dioxide. Specifically, the first silicon-based raw material powder may comprise a lower silicon oxide powder represented by the Formula of $SiO_x$ ($0.9 \leq x < 1.2$).

The first silicon-based raw material powder may be amorphous or crystalline $SiO_x$ (crystal size of silicon: about 2 nm to 3 nm) prepared by a gas phase method. The average particle diameter, as a median diameter, of the first silicon-based raw material powder may be about 0.5 μm to 30 μm, preferably, 0.5 μm to 25 μm, more preferably, 0.5 μm to 10 μm.

If the average particle diameter of the first silicon-based raw material powder is less than the above range, the volume density may be too small, which deteriorates the charge and discharge capacity per unit volume. If the average particle diameter of the first silicon-based raw material powder exceeds the above range, it may be difficult to fabricate an electrode, or it may be delaminated from the current collector. The average particle diameter may be $D_{50}$ (i.e., particle diameter when the cumulative weight is 50%) in particle size distribution measurement by laser light diffraction.

In addition, the process may further comprise forming a carbon layer on the surface of the first silicon-based raw material powder by using a chemical thermal decomposition deposition method. Thus, a first silicon-based raw material powder on which a carbon layer has been formed may be used as the silicon-based raw material powder.

Specifically, once a carbon layer has been formed on the surface of the first silicon-based raw material powder comprising the silicon particles, the etching step of the first-first step may be carried out. In such a case, there may be an advantage in that uniform etching is possible, and a high yield may be obtained.

The step of forming a carbon layer may be carried out by a process similar or identical to the process of forming a first carbon layer in the first-third step of the process for preparing a first composite to be described below.

Once a carbon layer has been formed on the surface of the first silicon-based raw material powder, the etching of the first-first step may be carried out. In such a case, uniform etching is possible, and the etching yield may be enhanced.

The etching step may comprise dry etching and wet etching.

If dry etching is used, selective etching may be possible.

Silicon oxide of the first silicon-based raw material powder is dissolved and eluted by the etching step to thereby form pores.

In addition, pores may be considered to be formed by, for example, the following Reaction Schemes 2 and 3.

[Reaction Scheme 2] $\quad$ $SiO_2 + 4HF$ (gas) $\rightarrow SiF_4 + 2H_2O$

[Reaction Scheme 3] $\quad$ $SiO_2 + 6HF$ (aq. solution) $\rightarrow H_2SiF_6 + 2H_2O$

Pores (voids) may be formed where silicon dioxide is dissolved and removed in the form of $SiF_4$ and $H_2SiF_6$ by the reaction mechanism as in the above reaction schemes.

In addition, silicon oxide, for example, silicon dioxide, contained in the first composite may be removed depending on the degree of etching, and pores may be formed therein.

The degree of formation of pores may vary with the degree of etching.

In addition, the ratio of O/Si and the specific surface area of the first silicon composite upon etching may significantly vary, respectively. In addition, the specific surface area and density of the first silicon composite in which pores are formed may significantly vary before and after the coating of carbon.

It is possible to obtain a first silicon composite powder having a plurality of pores formed on the surface of the first silicon composite particles, or on the surface and inside thereof, through the etching.

Here, etching refers to a process in which the first silicon-based raw material powder is treated with an etching solution containing a fluorine (F) atom-containing compound.

A commonly used etching solution containing a fluorine atom may be used without limitation within a range that does not impair the effects of the present invention as the etching solution containing a fluorine (F) atom-containing compound.

Specifically, the fluorine (F) atom-containing compound may comprise at least one selected from the group consisting of HF, $NH_4F$, and $HF_2$. As the fluorine (F) atom-containing compound is used, the etching step may be carried out more quickly.

The etching solution may further comprise one or more acids selected from the group consisting of organic acids, sulfuric acid, hydrochloric acid, phosphoric acid, nitric acid, and chromic acid.

As the etching conditions, the stirring temperature (processing temperature) may be, for example, 10°C to 90°C, preferably, 10°C to 80°C, more preferably, 20°C to 70°C.

The first silicon composite obtained upon the etching may comprise first silicon particles.

It is possible to obtain a first silicon composite having a plurality of pores formed on the surface, inside, or both of the first silicon composite particles through the etching. Here, the first silicon composite may have a three-dimensional (3D) structure in which two or more of the first silicon particles are combined with each other.

In addition, it is characterized in that the average particle diameter of the first silicon composite hardly changes by etching.

That is, the average particle diameter of the first silicon-based raw material powder before etching and the average particle diameter of the first silicon composite obtained by etching are approximately the same. The difference (change) in the average particle diameter of the first silicon-based raw material powder and that of the first silicon composite may be within about 5%.

In addition, the number of oxygen present on the surface of the first silicon composite may be lowered by the etching. That is, it is possible to significantly lower the oxygen fraction on the surface of the first silicon composite and to reduce the surface resistance through the etching. In such a case, the electrochemical characteristics, particularly, the lifespan characteristics of a lithium secondary battery may be further enhanced.

In addition, as the selective etching removes a large amount of silicon oxide (silicon dioxide), the first silicon particles may comprise silicon (Si) in a very high fraction as compared with oxygen (O) on their surfaces. That is, the molar ratio (O/Si) of oxygen (O) atoms to silicon (Si) atoms present in the first silicon composite may be significantly reduced. In such an event, it is possible to obtain a lithium secondary battery having an excellent capacity retention rate and enhanced discharge capacity and initial efficiency.

In addition, pores or voids can be formed at the locations where silicon oxide (silicon dioxide) is removed. As a result, the specific surface area of the first silicon composite may be increased as compared with the specific surface area of the first silicon-based raw material powder before etching.

According to an embodiment of the present invention, physical properties such as element content and specific surface area may vary before and after the etching step. That is, physical properties such as element content and specific surface area of the first silicon-based raw material powder before the etching step and the first silicon composite after the etching step may differ.

Here, the first silicon composite and the second silicon composite after the etching step and before the carbon coating have a porous structure unless otherwise specified.

The internal porosity of the first silicon composite upon the etching step may be 10% to 50%, preferably, 15% % to 50%, more preferably, 20% to 50%.

If the internal porosity of the first silicon composite satisfies the above range, it may be more advantageous for achieving the desired effects.

In the process for preparing a first silicon composite, the first-second step may comprise filtering and drying the product obtained by the etching to obtain a first silicon composite. The filtration and drying step may be carried out by a commonly used method.

In the process for preparing a first composite, the first-third step may comprise forming first carbon inside the first silicon composite and a first carbon layer on the surface of the first silicon composite by using a chemical thermal decomposition deposition method to prepare a first composite.

The first carbon layer may comprise at least one selected from the group consisting of amorphous carbon, crystalline carbon, graphene, reduced graphene oxide, a carbon nanotube, and a carbon nanofiber.

The step of forming first carbon inside the first silicon composite and a first carbon layer on the surface of the first silicon composite may be carried out by injecting at least one carbon source gas selected from a compound represented by the following Formulae 1 to 3 and carrying out a reaction of the first silicon composite obtained in the first-second step in a gaseous state at 400°C to 1,200°C.

$$[\text{Formula 1}] \qquad C_NH_{(2N + 2-A)}[OH]_A$$

in Formula 1, N is an integer of 1 to 20, and A is 0 or 1,

$$[\text{Formula 2}] \qquad C_NH_{(2N-B)}$$

in Formula 2, N is an integer of 2 to 6, and B is an integer of 0 to 2,

$$[\text{Formula 3}] \qquad C_xH_yO_z$$

in Formula 3, x is an integer of 1 to 20, y is an integer of 0 to 25, and z is an integer of 0 to 5.

The compound represented by Formula 1 may be at least one selected from the group consisting of methane, ethane, propane, butane, methanol, ethanol, propanol, propanediol, and butanediol. The compound represented by Formula 2 may be at least one selected from the group consisting of ethylene, acetylene, propylene, butylene, butadiene, and cyclopentene. The compound represented by Formula 3 may be at least one selected from the group consisting of benzene, toluene, xylene, ethylbenzene, naphthalene, anthracene, and dibutyl hydroxy toluene (BHT).

The carbon source gas may further comprise at least one inert gas selected from hydrogen, nitrogen, helium, and argon.

The reaction may be carried out, for example, at 400°C to 1,200°C, specifically, 500°C to 1, 100°C, more specifically, 600°C to 1,000°C.

The reaction time (or thermal treatment time) may be appropriately adjusted depending on the thermal treatment temperature, the pressure during the thermal treatment, the composition of the gas mixture, and the desired amount of carbon coating. For example, the reaction time may be 10 minutes to 100 hours, specifically, 30 minutes to 90 hours, more specifically, 50 minutes to 40 hours, but it is not limited thereto.

According to the process for preparing a first composite according to an embodiment, a thin and uniform first carbon layer may be formed on the surface of the first silicon composite even at a relatively low temperature through a vapor phase reaction of the carbon source gas. In addition, the detachment reaction in the first carbon layer thus formed does not substantially take place.

In addition, since a first carbon layer is uniformly formed over the entire surface of the first silicon composite through the gas-phase reaction using a chemical thermal decomposition deposition method, a carbon film (carbon layer) having high crystallinity can be formed.

In addition, carbon can be coated (embedded) in a plurality of pores formed by the etching of the first-first step and/or the first-second step through the vapor phase reaction using a chemical thermal decomposition deposition method, so that the porosity of the first composite and the silicon-carbon mixture can be controlled, and the desired effects can be achieved.

Thus, when a silicon-carbon mixture comprising the first composite is used as a negative electrode active material, the electrical conductivity of the negative electrode active material can be enhanced without changing the structure.

According to an embodiment of the present invention, when a reaction gas containing the carbon source gas and an inert gas is supplied to the first silicon composite, the reaction gas may penetrate into the pores of the first silicon composite, whereby first carbon is sufficiently formed (coated or embedded) inside the first silicon composite, and a first carbon layer is formed on the surface of the first silicon composite. As a result, a negative electrode active material may be enhanced in conductivity.

The specific surface area of the first composite may decrease with respect to the amount of carbon coating.

In addition, the porosity of the first composite, and furthermore, the porosity of the silicon-carbon mixture may be controlled as desired by adjusting the etching conditions and/or the carbon coating conditions. That is, as carbon penetrates and fills the pores of the first silicon composite, and as a carbon layer is formed on the surface of the first silicon composite, the first composite, specifically, the first composite (1) and the first composite (2) with controlled porosity can be obtained. The porosity of the silicon-carbon mixture can be optimized according to the characteristics required for a lithium secondary battery by this method.

The structure of the graphene-containing material may be a layer, a nanosheet type, or a structure in which several flakes are mixed.

If a first carbon layer comprising a graphene-containing material is uniformly formed over the entire surface of the first silicon composite, it is possible to suppress volume expansion as a graphene-containing material that has enhanced conductivity and is flexible for volume expansion is directly grown on the surface of the first silicon particles. In addition, the coating of a first carbon layer may reduce the chance that silicon directly meets the electrolyte, thereby reducing the formation of a solid electrolyte interphase (SEI) layer.

Meanwhile, after a lot of pores formed after the etching are coated with carbon, the first carbon may be inserted into the surface and internal pores of the first composite.

The porosity of the first composite after the carbon coating is as described above.

In addition, according to an embodiment, after the first-third step (in which first carbon is formed inside the first silicon composite in the step first-third, and a first carbon layer is formed on the surface of the first silicon composite), one or more of the first composites may be combined with each other to form an aggregate. It may further comprise pulverizing and classifying the first composite such that the average particle diameter of the first composite is 2 $\mu$m to 15 $\mu$m. The classification may be carried out to adjust the particle size distribution of the first composite, for which dry classification, wet classification, or classification using a sieve may be used. In the dry classification, the steps of dispersion, separation, collection (separation of solids and gases), and discharge are carried out sequentially or simultaneously using an air stream, in which pretreatment (adjustment of moisture, dispersibility, humidity, and the like) may be carried out prior to the classification so as not to decrease the classification efficiency caused by interference between particles, particle shape, airflow disturbance, velocity distribution, and influence of static electricity, and the like, to thereby adjust the moisture or oxygen concentration in the air stream used. In addition, a desired particle size distribution may be obtained by carrying out pulverization and classification of the first composite at one time. After the pulverization, it is effective to divide the coarse powder part and the granular part with a classifier or sieve.

## Second step of obtaining a second composite

The process for preparing a silicon-carbon mixture according to an embodiment comprises a second step of obtaining a second composite comprising second silicon particles, a magnesium compound, and second carbon.

The process for preparing a second composite comprises a second-first step of obtaining a silicon composite oxide powder using a second silicon-based raw material and a magnesium-based raw material; a second-second step of etching the silicon composite oxide powder using an etching solution comprising a fluorine (F) atom-containing compound; a second-third step of filtering and drying the composite obtained by the etching to obtain a second silicon composite; and a second-fourth step of forming second carbon inside the second silicon composite and a second carbon layer on the surface of the second silicon composite by using a chemical thermal decomposition deposition method to obtain a second composite.

The process for preparing a second composite has an advantage in that mass production is possible through a continuous process with minimized steps.

Specifically, in the process for preparing a second composite, the second-first step may comprise obtaining a silicon composite oxide powder using a silicon-based raw material and a magnesium-based raw material. The second-first step may be carried out by, for example, using the method described in Korean Laid-open Patent Publication No. 2018-0106485.

In addition, the second silicon-based raw material may be the same as, or similar to, the first silicon-based raw material.

The silicon composite oxide powder may comprise magnesium silicate.

The content of magnesium (Mg) in the silicon composite oxide powder obtained in the second-first step may be 1% by weight to 15% by weight, 2% by weight to 10% by weight, or 2% by weight to 8% by weight, based on the total weight of the silicon composite oxide. If the content of magnesium (Mg) in the silicon composite oxide satisfies the above range, the molar ratio (O/ Si) of oxygen (O) atoms to silicon (Si) atoms in the second composite may satisfy the desired range. In such an event, it is possible to further enhance the performance of a lithium secondary battery such as the discharge capacity, initial charge and discharge efficiency, and capacity retention rate of the lithium secondary battery.

According to an embodiment, the process may further comprise forming a carbon layer on the surface of the silicon composite oxide by using a chemical thermal decomposition deposition method.

Specifically, once a carbon layer has been formed on the surface of the silicon composite oxide powder, the etching step of the second-second step may be carried out. In such a case, there may be an advantage in that uniform etching is possible, and a high yield may be obtained.

The step of forming a carbon layer may be carried out by a process similar or identical to the process of forming second carbon and a second carbon layer (or the process of forming first carbon and a first carbon layer in the first-third step) in the second-fourth step of the process for preparing a second composite to be described below.

In the process for preparing a second composite, the second-second step may comprise etching the silicon composite oxide powder using an etching solution comprising a fluorine (F) atom-containing compound.

The etching may be carried out by the etching method used in the first-first step above.

Silicon oxide of the silicon composite oxide powder is dissolved and eluted by the etching step to thereby form pores. That is, the silicon composite oxide powder is etched using an etching solution comprising a fluorine (F) atom-containing compound in the etching step to thereby form pores.

In addition, the magnesium silicate is converted to fluorine-containing magnesium compound by the etching step, so that a second silicon composite comprising silicon particles and a fluorine-containing magnesium compound may be prepared.

If the silicon composite oxide powder is etched using a fluorine (F) atom-containing compound (e.g., HF), a part of magnesium silicate is converted to a fluorine-containing magnesium compound, and pores are formed at the same time in the portion from which silicon oxide has been eluted and removed. As a result, a second silicon composite comprising silicon particles, magnesium silicate, and fluorine-containing magnesium compound may be prepared.

For example, in the etching step in which HF is used, when dry etching is carried out, it may be represented by the following Reaction Schemes G1 and G2, and when wet etching is carried out, it may be represented by the following Reaction Schemes L1a to L2:

$$MgSi_3 + 6HF \, (gas) \rightarrow SiF_4 \, (g) + MgF_2 + 3H_2O \quad (G1)$$

$$Mg_2SiO_4 + 8HF \, (gas) \rightarrow SiF_4 \, (g) + 2MgF_2 + 4H_2O \quad (G2)$$

$$MgSiO_3 + 6HF \, (aq. \, solution) \rightarrow MgSiF_6 + 3H_2O \quad (L1a)$$

$$MgSiF_6 + 2HF \, (aq. \, solution) \rightarrow MgF_2 + H_2SiF_6 \quad (L1b)$$

$$MgSiO_3 + 2HF \rightarrow SiO_2 + MgF_2 + H_2O \quad (L1c)$$

$$SiO_2 + 6HF \, (1) \rightarrow H_2SiF_6 + 2H_2O \quad (L1d)$$

$$MgSiO_3 + 8HF \, (aq. \, solution) \rightarrow MgF_2 + H_2SiF_6 + 3H_2O \quad (L1)$$

$$Mg_2SiO_4 + 8HF \, (aq. \, solution) \rightarrow MgSiF_6 + MgF_2 + 4H_2O \quad (L2a)$$

$$MgSiF_6 + 2HF \, (aq. \, solution) \rightarrow MgF_2 + H_2SiF_6 \quad (L2b)$$

$$Mg_2SiO_4 + 4HF \, (aq. \, solution) \rightarrow SiO_2 + 2MgF_2 + 2H_2O \quad (L2c)$$

$$SiO_2 + 6HF \, (aq. \, solution) \rightarrow H_2SiF_6 + 2H_2O \quad (L2d)$$

$$Mg_2SiO_4 + 10HF \, (aq. \, solution) \rightarrow 2MgF_2 + H_2SiF_6 + 4H_2O \quad (L2)$$

In addition, the formation of pores is as described above.

Pores (voids) may be formed where silicon oxide is dissolved and removed in the form of $SiF_4$ and $H_2SiF_6$ by the reaction mechanism as in the above reaction schemes.

In addition, silicon oxide (silicon dioxide) contained in the second silicon composite may be removed depending on the degree of etching, and pores may be formed therein.

The degree of formation of pores may vary with the degree of etching.

In addition, the ratio of O/Si and the specific surface area of the second silicon composite before and after etching may significantly vary, respectively.

In addition, the specific surface area and the density of the second silicon composite in which pores are formed may significantly vary before and after the coating of carbon.

It is possible to obtain a second silicon composite powder having a plurality of pores formed on the surface of the second silicon composite particles, or on the surface and inside thereof, through the etching.

Here, the second silicon composite may have a three-dimensional (3D) structure in which two or more of the second silicon particles are combined with each other. In addition, it is characterized in that the average particle diameter of the second silicon composite hardly changes by etching.

That is, the average particle diameter of the silicon composite oxide powder before etching and the average particle diameter of the second silicon composite obtained by etching are approximately the same. The difference (change) in the average particle diameter of the silicon composite oxide powder and that of the second silicon composite may be within about 5%.

In addition, the number of oxygen present on the surface of the second silicon composite may be lowered by the etching. That is, it is possible to significantly lower the oxygen fraction on the surface of the second silicon composite and to reduce the surface resistance through the etching. As a result, the electrochemical characteristics, particularly, the lifespan characteristics of a lithium secondary battery may be significantly enhanced.

In addition, as the selective etching removes a large amount of silicon oxide, the second silicon particles or second silicon aggregates may comprise silicon (Si) in a very high fraction as compared with oxygen (O) on their surfaces. That is, the molar ratio (O/Si) of oxygen (O) atoms to silicon (Si) atoms present in the second composite may be significantly reduced. In such an event, it is possible to obtain a lithium secondary battery having an excellent capacity retention rate and enhanced discharge capacity and initial efficiency.

The porosity formed by the etching is as described for the first silicon composite.

The second-third step may comprise filtering and drying the product obtained by the etching to obtain a second silicon composite. The filtration and drying step may be carried out by a commonly used method.

The process for preparing a second composite may comprise a second-fourth step of forming second carbon inside the second silicon composite and a carbon layer on the surface of the second silicon composite by using a chemical thermal decomposition deposition method to prepare a second composite.

The type of the second carbon layer is as described above.

The step of forming a second carbon layer may be carried out in the same way as the process of forming first carbon inside the first silicon composite and a first carbon layer on the surface of the first silicon composite in the first-third step.

In addition, the porosity of the second composite, and furthermore, the porosity of the silicon-carbon mixture may be controlled as desired by adjusting the etching conditions and/or the carbon coating conditions. For example, as second carbon penetrates and fills the pores of the second silicon composite by the adjustment of the carbon coating conditions, and a second carbon layer is formed on the surface of the second silicon composite, the second composite, specifically, the second composite (1) and the second composite (2) with controlled porosity can be obtained. The porosity of the silicon-carbon mixture can be optimized according to the characteristics required for a lithium secondary battery by this method.

In addition, according to an embodiment, it may further comprise, after the second-second step (after the formation of a second carbon layer in the second-fourth step), pulverizing and classifying the second composite such that the average particle diameter of the second composite is 2 μm to 15 μm. The classification may be carried out to adjust the particle size distribution of the second composite, for which dry classification, wet classification, or classification using a sieve may be used. In the dry classification, the steps of dispersion, separation, collection (separation of solids and gases), and discharge are carried out sequentially or simultaneously using an air stream, in which pretreatment (adjustment of moisture, dispersibility, humidity, and the like) may be carried out prior to the classification so as not to decrease the classification efficiency caused by interference between particles, particle shape, airflow disturbance, velocity distribution, and influence of static electricity, and the like, to thereby adjust the moisture or oxygen concentration in the air stream used. In addition, a desired particle size distribution may be obtained by carrying out pulverization and classification of the second composite at one time. After the pulverization, it is effective to divide the coarse powder part and the granular part with a classifier or sieve.

Third step of mixing the first composite and the second composite

The process for preparing a silicon-carbon mixture comprises a third step of mixing the first composite and the second composite.

The mixing weight ratio of the first composite and the second composite may be 90: 10 to 50:50, preferably, 90: 10 to 60:40, more preferably, 90: 10 to 70:30.

If the mixing weight ratio of the first composite and the second composite satisfies the above range, the molar ratio (O/Si) of oxygen (O) atoms to silicon (Si) atoms in the silicon-carbon mixture and the porosity thereof can be optimized. As a result, a silicon-carbon mixture having desired properties can be achieved.

If the mixing weight ratio of the first composite and the second composite is outside the above range, it is difficult to achieve the desired effects in the present invention, and, in particular, the cycle characteristics of a lithium secondary battery may be deteriorated.

The mixing may be carried out by at least one method selected from dry mixing and wet mixing.

According to an embodiment, the mixing may be carried out using, for example, a co-rotational mixer to prepare a powder containing mixed-phase particles. The rotational speed during the mixing may be 1,000 to 3,000 rpm, for example, about 2,000 rpm, and the mixing time may be 2 minutes to 20 minutes, preferably, 3 minutes to 10 minutes, more preferably, 5 minutes to 8 minutes, for example, about 6 minutes. If the mixing time is within the above range, the first composite and the second composite may be efficiently and homogeneously mixed.

Negative electrode active material

The negative electrode active material according to an embodiment may comprise the silicon-carbon mixture.

In addition, the negative electrode active material may further comprise a carbon-based negative electrode material, specifically, a graphite-based negative electrode material.

The negative electrode active material may be used as a mixture of the silicon-carbon mixture and the carbon-based negative electrode material, for example, a graphite-based negative electrode material. In such an event, the electrical resistance of the negative electrode active material can be reduced, while the expansion stress involved in charging can be relieved at the same time. The carbon-based negative electrode material may comprise, for example, at least one selected from the group consisting of natural graphite, synthetic graphite, soft carbon, hard carbon, mesocarbon, carbon fiber, carbon nanotube, pyrolytic carbon, coke, glass carbon fiber, sintered organic high molecular compound, and carbon black.

The content of the carbon-based negative electrode material may be 5% by weight to 95% by weight, preferably, 10% by weight to 90% by weight, more preferably, 20% by weight to 90% by weight, based on the total weight of the negative electrode active material.

In addition, if silicon particles having a crystallite size of 20 nm or less, for example, 15 nm or less, are used as mixed with graphite-based materials generally having low volume expansion, only the silicon particles do not cause large volume expansion. Since there is little separation of the graphite-based material and the silicon particles, a lithium secondary battery with excellent cycling characteristics can be obtained.

**Lithium secondary battery**

According to an embodiment, the present invention may provide a negative electrode comprising the negative electrode active material and a lithium secondary battery comprising the same.

The lithium secondary battery may comprise a positive electrode, a negative electrode, a separator interposed between the positive electrode and the negative electrode, and a non-aqueous liquid electrolyte in which a lithium salt is dissolved. The negative electrode active material may comprise a negative electrode active material comprising a silicon-carbon mixture.

The negative electrode may be composed of a negative electrode mixture only or may be composed of a negative electrode current collector and a negative electrode mixture layer (negative electrode active material layer) supported thereon. Similarly, the positive electrode may be composed of a positive electrode mixture only or may be composed of a positive electrode current collector and a positive electrode mixture layer (positive electrode active material layer) supported thereon. In addition, the negative electrode mixture and the positive electrode mixture may each further comprise a conductive agent and a binder (binding agent).

Materials known in the art may be used as a material constituting the negative electrode current collector and a material constituting the positive electrode current collector. Materials known in the art may be used as a binder and a conductive material added to the negative electrode and the positive electrode.

If the negative electrode is composed of a current collector and an active material layer supported thereon, the negative electrode may be prepared by coating the negative electrode active material composition comprising the silicon-carbon mixture on the surface of the current collector and drying it.

In addition, the lithium secondary battery comprises a non-aqueous liquid electrolyte in which the non-aqueous liquid electrolyte may comprise a non-aqueous solvent and a lithium salt dissolved in the non-aqueous solvent. A solvent commonly used in the field may be used as a non-aqueous solvent. Specifically, an aprotic organic solvent may be used. Examples of the aprotic organic solvent include cyclic carbonates such as ethylene carbonate, propylene carbonate, and butylene carbonate, cyclic carboxylic acid esters such as furanone, chain carbonates such as diethyl carbonate, ethylmethyl carbonate, and dimethyl carbonate, chain ethers such as 1,2-methoxyethane, 1,2-ethoxyethane, and ethoxymethoxyethane, and cyclic ethers such as tetrahydrofuran and 2-methyltetrahydrofuran. They may be used alone or in combination of two or more.

The lithium secondary battery may comprise a non-aqueous lithium secondary battery.

The negative electrode active material and the lithium secondary battery using the silicon-carbon mixture may enhance the capacity, initial charge and discharge efficiency, and capacity retention rate thereof.

Mode for the Invention

Hereinafter, the present invention will be described in detail with reference to examples. The following examples are only illustrative of the present invention, and the scope of the present invention is not limited thereto.

Example

### <Preparation Example 1: Preparation of a first composite>

### Preparation Example 1-1

(1) Step 1-1: 50 g of the silicon oxide ($SiO_x$, x = 0.9) powder prepared by vapor deposition using a silicon powder and a silicon dioxide powder was dispersed in water. While it was stirred at a speed of 300 rpm, 50 ml of an aqueous solution of 40% by weight of HF was added as an etching solution to carry out etching the silicon oxide-based raw material powder for 1 hour.

(2) Step 1-2: The product obtained by the above etching was filtered and dried at 150°C for 2 hours. Then, in order to control the particle size of the composite, it was pulverized using a mortar to have an average particle diameter of 5.1 $\mu$m, to thereby prepare a first silicon composite.

(3) Step 1-3: 10 g of the first silicon composite was placed inside a tubular electric furnace, and argon (Ar) and methane gas were flowed at a rate of 1 liter/minute, respectively. It was maintained at 900°C for 1 hour and then cooled to room temperature, thereby forming first carbon inside the first silicon composite and a first carbon layer on the surface of the first silicon composite, whereby a first silicon-carbon composite having the content of each component and physical properties shown in Table 3 below was prepared.

(4) Step 1-4: In order to control the particle size of the first silicon-carbon composite, it was pulverized and classified to have an average particle diameter of 4.8 $\mu$m by a mechanical method, thereby preparing a first composite (C1) having the physical properties shown in Table 1 below (Preparation Example 1-1).

### Preparation Examples 1-2 to 1-5

First composites were each prepared in the same manner as in Preparation Example 1-1, except that the content of each element and the physical properties of the composite were adjusted as shown in Table 1 below.

### <Preparation Example 2: Preparation of a second composite>

### Preparation Example 2-1

(1) Step 2-1: A silicon composite oxide powder was prepared using a silicon powder, a silicon dioxide powder, and metallic magnesium by the method described in Example 1 of Korean Laid-open Patent Publication No. 2018-0106485.

(2) Step 2-2: 50 g of the silicon composite oxide powder was dispersed in water. While it was stirred at a speed of 300 rpm, 650 ml of an aqueous solution of 30% by weight of HF was added as an etching solution to etch the silicon composite oxide powder for 1 hour at room temperature.

(3) Step 2-3: The product obtained by the above etching was filtered and dried at 150°C for 2 hours. Then, in order to control the particle size of the composite, it was pulverized using a mortar to have an average particle diameter of 5.8 $\mu$m, to thereby prepare a second silicon composite.

(3) Step 2-4: 10 g of the second silicon composite was placed inside a tubular electric furnace, and argon (Ar) and methane gas were flowed at a rate of 1 liter/minute, respectively. It was maintained at 900°C for 1 hour and then cooled to room temperature, thereby forming second carbon inside the second silicon composite and a second carbon layer on the surface of the second silicon composite, whereby a second silicon-carbon composite having the content of each component and physical properties shown in Table 2 below was prepared.

(5) Step 5: In order to control the particle size of the second silicon-carbon composite, it was pulverized and classified to have an average particle diameter of 4.9 $\mu$m by a mechanical method, thereby preparing a second composite (Preparation Example 2-1).

**Preparation Examples 2-2 to 2-6**

Second composites were each prepared in the same manner as in Preparation Example 2-1, except that the content of each element and the physical properties of the composite were adjusted as shown in Table 2 below.

[Table 1]

| | | Prep. Ex. 1-1 | Prep. Ex. 1-2 | Prep. Ex. 1-3 | Prep. Ex. 1-4 | Prep. Ex. 1-5 |
|---|---|---|---|---|---|---|
| First composite | C content (% by weight) | 33 | 36 | 31 | 21 | 24 |
| | O content (% by weight) | 3.96 | 1.79 | 6.43 | 11.1 | 8.79 |
| | O/Si molar ratio | 0.11 | 0.05 | 0.18 | 0.29 | 0.23 |
| | Si crystallite size (nm) | 2.9 | 2.8 | 6.2 | 3.6 | 3.2 |
| | $D_{50}$ ($\mu$m) | 4.8 | 4.8 | 4.9 | 4.9 | 5.1 |
| | Density (g/cm$^3$) | 2.09 | 2.11 | 2.03 | 2.11 | 2.12 |
| | BET (m$^2$/g) | 2.8 | 3.2 | 3.7 | 3.9 | 4.1 |

[Table 2]

| | | Prep. Ex. 2-1 | Prep. Ex. 2-2 | Prep. Ex. 2-3 | Prep. Ex. 2-4 | Prep. Ex. 2-5 | Prep. Ex. 2-6 |
|---|---|---|---|---|---|---|---|
| Second composite | Mg content (% by weight) | 3.1 | 2.1 | 3.4 | 13.1 | 6.2 | 7.2 |
| | C content (% by weight) | 25 | 29 | 30 | 18 | 24 | 26 |
| | O content (% by weight) | 5.41 | 1.86 | 6.82 | 9.69 | 9.57 | 8.06 |
| | O/Si molar ratio | 0.15 | 0.05 | 0.21 | 0.38 | 0.31 | 0.27 |
| | Si crystallite size (nm) | 3.8 | 3.7 | 4.2 | 5.9 | 6.8 | 5.4 |
| | $D_{50}$ ($\mu$m) | 4.9 | 4.8 | 4.7 | 5.3 | 5.1 | 5.1 |
| | Density (g/cm$^3$) | 2.19 | 2.21 | 2.23 | 2.29 | 2.24 | 2.27 |
| | BET (m$^2$/g) | 4.2 | 3.8 | 4.3 | 4.8 | 5.2 | 3.9 |

**Example 1**

**Preparation of a silicon-carbon composite**

The first composite of Preparation Example 1-1 and the second composite of Preparation Example 2-1 were mixed at a weight ratio of 70:30. Here, the mixing was carried out using a co-rotational mixer (THINKY MIXER) to prepare a powder containing mixed-phase particles composed of the first composite and the second composite. The mixing was carried out at a rotational speed of about 2,000 rpm for a mixing time of about 6 minutes. Physical properties of the silicon-carbon mixture thus prepared are shown in Table 3 below.

**Fabrication of a lithium secondary battery**

<Preparation of a negative electrode>

The silicon-carbon mixture and synthetic graphite (Aldrich) were mixed at a weight ratio of 15:85 and used as a negative electrode active material.

Super-C65 (Imerys) and SWCNT (OCSiAl) were mixed at a weight ratio of 90:10 and used as a conductive material.

Carboxymethylcellulose (CMC) and styrene-butadiene rubber (SBR) were mixed at a weight ratio of 50:50 and used as a binder.

The negative electrode active material, the conductive material, and the binder were mixed at a weight ratio of 96:1:3 with water to prepare a negative electrode active material composition (slurry) having a solids content of 45%.

The negative electrode active material composition was applied to a copper foil having a thickness of 15 $\mu$m, dried, and rolled to prepare a negative electrode.

<Preparation of a positive electrode>

Ni-rich NCM (NCM811) was used as a positive electrode active material, Super-C65 (Imerys) was used as a conductive material, and PVdF (Solvay) was used as a binder to prepare a positive electrode active material composition (slurry). The positive electrode active material composition was applied to an aluminum foil having a thickness of 15 $\mu$m, dried, and rolled to prepare a positive electrode.

<Fabrication of a lithium secondary battery>

A separator of a porous polypropylene sheet (25 $\mu$m) was interposed between the negative electrode and the positive electrode prepared above, which was then wound to prepare a jelly roll. It was placed in an aluminum pouch exterior material, which was sealed, and an electrolyte solution was injected thereto to prepare a monocell.

Here, a liquid electrolyte containing 1 M LiPF$_6$ in a mixed solvent of ethylene carbonate (EC) and diethylene carbonate (DEC) at a volume ratio of 1:1 was used as the electrolyte solution.

**Examples 2 to 8**

Silicon-carbon mixtures and lithium secondary batteries were each prepared in the same manner as in Example 1, except that different types of the first composite and the second composite were used and that the mixing weight ratio thereof was changed to change the O/Si molar ratio as shown in Table 3 below.

**Comparative Example 1**

A silicon-carbon mixture and a lithium secondary battery were each prepared in the same manner as in Example 1, except that a mixture of the first composite obtained in Preparation Example 1-1 and the first composite obtained in Preparation Example 1-2 was used as the first composite and that a second composite was not used as shown in Table 4 below.

**Comparative Example 2**

The second composite obtained in Preparation Example 2-2, without a first composite, was used as a negative electrode active material to prepare a lithium secondary battery as shown in Table 4 below.

**Test Example**

**<Test Example 1> X-ray diffraction analysis**

**Measurement of the Si crystal size**

The crystal size of Si in the first silicon particles and the second silicon particles in the silicon-carbon mixture was determined by the Scherrer equation of the following Equation 3 based on a full width at half maximum (FWHM) of the peak corresponding to Si (220) in the X-ray diffraction analysis.

$$[\text{Equation 3}]$$

$$\text{Crystal size (nm)} = K\lambda/B\cos\theta$$

In Equation 3, K is 0.9, $\lambda$ is 0.154 nm, B is a full width at half maximum (FWHM), and $\theta$ is a peak position (angle).

**Crystal structure of a silicon-carbon mixture**

The crystal structure of the silicon-carbon mixture prepared in the Examples was analyzed with an X-ray diffraction analyzer (X'Pert3 of Malvern Panalytical). As a result of the analysis, peaks corresponding to $MgF_2$ crystals and peaks corresponding to Si crystals were confirmed.

**<Test Example 2> Analysis of the content of the component elements and density of the composite**

The contents of magnesium (Mg), oxygen (O), carbon (C), and silicon (Si) in the first composite, the second composite, and the silicon-carbon mixture were analyzed.

The content of magnesium (Mg) was analyzed by inductively coupled plasma (ICP) emission spectroscopy. The contents of oxygen (O) and carbon (C) were measured by an elemental analyzer, respectively. The content of silicon (Si) was a value calculated based on the contents of oxygen (O) and magnesium (Mg).

Meanwhile, the components contained in the silicon-carbon mixture were confirmed using FIB-SEM EDS (S-4700; Hitachi, QUANTA 3D FEG; FEI, EDS System; EDAX). As a result, Mg, C, O, and Si components were observed in the silicon-carbon mixture.

**<Test Example 3> Measurement of an average particle diameter of the composite and composite particles**

The average particle diameter ($D_{50}$) of the first and second composites particles and the silicon-carbon mixture particles was measured as a diameter average value $D_{50}$, i.e., a particle size or median diameter when the cumulative volume is 50% in particle size distribution measurement according to a laser beam diffraction method.

**<Test Example 4> Measurement of capacity, initial efficiency, and capacity retention rate of the lithium secondary battery**

The monocells (lithium secondary batteries) prepared in the Examples and Comparative Examples were each charged at a constant current of 0.1 C until the voltage reached 0.005 V and then the current reached 0.005 C at a constant voltage. It was then discharged at a constant current of 0.1 C until the voltage reached 2.0 V to measure the charge capacity (mAh /g), discharge capacity (mAh/g), and initial efficiency (%). The results are shown in Tables 3 and 4 below.

[Equation 4]

$$\text{Initial efficiency (\%)} = \text{discharge capacity/charge capacity} \times 100$$

In addition, the monocells (lithium secondary batteries) prepared in the Examples and Comparative Examples were each charged at a constant current of 0.1 C until the voltage reached 4.25 V and then the current reached 0.05 C at a constant voltage. It was then discharged at a constant current of 0.1 C until the voltage reached 2.5 V. 1,000 cycles under these conditions were carried out to measure a capacity retention rate upon 1,000 cycles according to the following Equation 5.

Capacity retention rate upon 1,000 cycles (%) = Discharge capacity upon 1,000 cycles/discharge capacity of first cycle $\times$ 100

[Equation 5]

The content of each element and the physical properties of the first composite and the second composite prepared in the Preparation Example are summarized in Tables 1 and 2 below, and the content of each element and the physical properties of the mixture or composite prepared in the Examples and Comparative Examples, and the characteristics of the lithium secondary battery using the same are summarized in Tables 3 and 4 below.

[Table 3]

| | | Ex. 1 | Ex. 2 | Ex. 3 | Ex. 4 | Ex. 5 | Ex. 6 | Ex. 7 | Ex. 8 |
|---|---|---|---|---|---|---|---|---|---|
| Silicon-carbon mixture | First composite | Prep. Ex. 1-1 | | Prep. Ex. 1-2 | | Prep. Ex. 1-3 | Prep. Ex. 1-4 | Prep. Ex. 1-5 | |
| | Second composite | Prep. Ex. 2-1 | Prep. Ex. 2-3 | Prep. Ex. 2-2 | Prep. Ex. 2-4 | Prep. Ex. 2-1 | Prep. Ex. 2-5 | Prep. Ex. 2-3 | Prep. Ex. 2-6 |
| | First composite: second composite (weight ratio) | 70:30 | 80:20 | 90:10 | 50:50 | 80:20 | 60:40 | 50:50 | 90:10 |
| | Mg content (% by weight) | 0.69 | 0.47 | 0.15 | 5.4 | 0.47 | 1.88 | 1.19 | 0.53 |
| | C content (% by weight) | 30.9 | 32.7 | 35.2 | 27.1 | 29.8 | 22.5 | 27.2 | 24.4 |
| | O content (% by weight) | 4.4 | 4.5 | 1.8 | 5.7 | 6.2 | 10.5 | 7.8 | 8.7 |
| | Si content (% by weight) | 62.9 | 61.6 | 62.6 | 53.3 | 62.8 | 62.2 | 61.9 | 65.5 |
| | Mg/Si molar ratio | 0.013 | 0.009 | 0.003 | 0.116 | 0.009 | 0.035 | 0.022 | 0.009 |
| | O/Si molar ratio | 0.12 | 0.13 | 0.05 | 0.19 | 0.17 | 0.29 | 0.22 | 0.23 |
| | F/O molar ratio | 0.21 | 0.14 | 0.11 | 1.23 | 0.1 | 0.24 | 0.2 | 0.08 |
| | Si crystallite size (nm) | 3.2 | 3.3 | 3.1 | 4.4 | 5.8 | 4.9 | 3.8 | 3.5 |
| | $D_{50}$ ($\mu$m) | 4.8 | 4.9 | 4.8 | 5.1 | 4.9 | 5.0 | 5.0 | 5.1 |
| | Density (g/cm$^3$) | 2.13 | 2.14 | 2.12 | 2.21 | 2.11 | 2.17 | 2.17 | 2.14 |
| | BET (m$^2$/g) | 3.6 | 3.7 | 3.5 | 4.1 | 3.9 | 4.5 | 4.2 | 4 |
| Characteristics of lithium secondary battery | Discharge capacity (mAh/g) | 1,707 | 1,715 | 1,920 | 1,624 | 1,661 | 1,618 | 1,637 | 1,651 |
| | Initial efficiency (%) | 87.1 | 86.9 | 89.2 | 87.1 | 86.3 | 85.1 | 85.8 | 85.3 |
| | Capacity retention rate upon 1,000 cycles (%) | 69 | 67 | 72 | 65 | 58 | 62 | 65 | 63 |

[Table 4]

| | | | Comp. Ex. 1 | Comp. Ex. 2 |
|---|---|---|---|---|
| Silicon-carbon mixture | First composite | | Prep. Ex. 1-1 | None |
| | | | Prep. Ex. 1-2 | |
| | Second composite | | | Prep. Ex. 2-2 |
| | First composite: second composite (weight ratio) | | 60:40 (Prep. Ex. 1-1:Prep. Ex. 1-2) | 0:100 |
| | Mg content (% by weight) | | × | 3.2 |
| | C content (% by weight) | | 33.6 | 23 |
| | O content (% by weight) | | 2.64 | 5.42 |
| | Si content (% by weight) | | 63.3 | 63.4 |
| | Mg/Si molar ratio | | × | 0.058 |
| | O/Si molar ratio | | 0.07 | 0.15 |
| | F/O molar ratio | | × | 0.78 |
| | Si crystallite size (nm) | | 7 | 6.4 |
| | $D_{50}$ ($\mu$m) | | 4.6 | 5.2 |
| | Density (g/cm$^3$) | | 2.17 | 1.88 |
| | BET (m$^2$/g) | | 3.7 | 7 |
| Characteristics of lithium secondary battery | Discharge capacity (mAh/g) | | 1,844 | 1,673 |
| | Initial efficiency (%) | | 89.2 | 85.1 |
| | Capacity retention rate upon 1,000 cycles (%) | | 52 | 54 |

As can be seen from Tables 3 and 4 above, the silicon-carbon mixture comprising the first composite and the second composite of Examples 1 to 8 in which the molar ratio (O/Si) of oxygen (O) atoms to silicon (Si) atoms satisfied a specific range. Thus, the lithium secondary batteries prepared using the same were overall enhanced in performance in terms of discharge capacity, initial efficiency, and capacity retention rate as compared with the lithium secondary batteries of Comparative Examples 1 and 2.

Specifically, the lithium secondary batteries of Examples 1 to 8 using a silicon-carbon mixture comprising a first composite and a second composite and having a molar ratio (O/Si) of oxygen (O) atoms to silicon (Si) atoms of 0.05 to 0.29 had a discharge capacity of about 1,700 mAh/g or more, an initial efficiency of about 85% or more, and a capacity retention rate upon 1,000 cycles of about 60% or more in most cases. The performance of the lithium secondary battery was overall excellent.

In contrast, the lithium secondary battery of Comparative Example 1 using a silicon-carbon mixture in which two types of first composites were mixed and no second composite was contained and the lithium secondary battery of Comparative Example 2 using a second composite alone showed a similar level of discharge capacity and initial efficiency appeared, whereas the capacity retention rate upon 1,000 cycles was significantly reduced to 54% or less.

Meanwhile, when the molar ratio (O/Si) of oxygen (O) atoms to silicon (Si) atoms was less than 0.01, manufacture was not possible.

Further, according to an embodiment, since the content of carbon and porosity can be easily controlled, and, as a result, an excellent capacity retention rate can be maintained even after cycles of thousands or more for a long period of time, while the above molar ratio (O/Si) of oxygen (O) atoms to silicon (Si) atoms in the silicon-carbon mixture is satisfied, it is possible to further enhance reliability.

**Claims**

1. A silicon-carbon mixture, which comprises a first composite and a second composite,

   wherein the first composite comprises first silicon particles and first carbon,

the second composite comprises second silicon particles, a magnesium compound, and second carbon, and the molar ratio (O/Si) of oxygen (O) atoms to silicon (Si) atoms in the silicon-carbon mixture is 0.01 to 0.40.

2. The silicon-carbon mixture of claim 1, wherein the weight ratio of the first composite and the second composite is 90: 10 to 50:50.

3. The silicon-carbon mixture of claim 1, wherein the molar ratio (O/Si) of oxygen (O) atoms to silicon (Si) atoms in the first composite is 0.01 to 0.30, and
the molar ratio (O/Si) of oxygen (O) atoms to silicon (Si) atoms in the second composite is 0.01 to 0.50.

4. The silicon-carbon mixture of claim 1, wherein the silicon-carbon mixture comprises a silicon aggregate in which silicon particles are combined with each other.

5. The silicon-carbon mixture of claim 1, wherein the content of magnesium (Mg) is 0.1% by weight to 15.0% by weight, the content of oxygen (O) is 1% by weight to 12% by weight, the content of silicon (Si) is 35% by weight to 80% by weight, and the content of carbon (C) is 15% by weight to 50% by weight, based on the total weight of the silicon-carbon mixture, in the silicon-carbon mixture.

6. The silicon-carbon mixture of claim 1, wherein the content of oxygen (O) in the first composite is 1% by weight to 12% by weight based on the total weight of the first composite, and
the content of oxygen (O) in the second composite is 1% by weight to 12% by weight based on the total weight of the second composite.

7. The silicon-carbon mixture of claim 1, wherein the magnesium compound in the second composite comprises magnesium silicate, fluorine-containing magnesium compound, or a mixture thereof,

the magnesium silicate comprises $MgSiO_3$, $Mg_2SiO_4$, or a mixture thereof, and
the fluorine-containing magnesium compound comprises magnesium fluoride ($MgF_2$), magnesium fluoride silicate ($MgSiF_6$), or a mixture thereof.

8. The silicon-carbon mixture of claim 1, wherein the first composite comprises a first silicon composite and a first carbon layer on the surface thereof, the first silicon particles are present in the first silicon composite, and the first carbon is contained in the first carbon layer and inside the first silicon composite, and
the second composite comprises a second silicon composite and a second carbon layer on the surface thereof, the second silicon particles and a magnesium compound are present in the second silicon composite, and the second carbon is contained inside the second carbon layer and the second silicon composite.

9. The silicon-carbon mixture of claim 1, wherein the content of carbon (C) in the first composite is 10% by weight to 50% by weight based on the total weight of the first composite, and
the content of carbon (C) in the second composite is 10% by weight to 50% by weight based on the total weight of the second composite.

10. The silicon-carbon mixture of claim 8, wherein the content of carbon (C) contained inside the first composite is 10% by weight to 45% by weight based on the total weight of the first composite, and
the content of carbon (C) contained inside the second composite is 10% by weight to 45% by weight based on the total weight of the second composite.

11. A process for preparing the silicon-carbon mixture of claim 1, which comprises:

a first step of obtaining a first composite comprising first silicon particles and first carbon;
a second step of obtaining a second composite comprising second silicon particles, a magnesium compound, and second carbon; and
a third step of mixing the first composite and the second composite.

12. The process for preparing the silicon-carbon mixture according to claim 11, wherein the first step of obtaining the first composite comprises:

a first-first step of etching a first silicon-based raw material powder using an etching solution containing a fluorine (F) atom-containing compound;

a first-second step of obtaining a first silicon composite by filtering and drying the product obtained by the etching; and

a first-third step of forming first carbon inside the first silicon composite and a first carbon layer on the surface of the first silicon composite using a chemical thermal decomposition deposition method to obtain a first composite.

13. The process for preparing the silicon-carbon mixture according to claim 11, wherein the second step for preparing the second composite comprises:

a second-first step of obtaining a silicon composite oxide powder using a second silicon-based raw material and a magnesium-based raw material;

a second-second step of etching the silicon composite oxide powder using an etching solution comprising a fluorine (F) atom-containing compound;

a second-third step of filtering and drying the composite obtained by the etching to obtain a second silicon composite; and

a second-fourth step of forming second carbon inside the second silicon composite and a second carbon layer on the surface of the second silicon composite by using a chemical thermal decomposition deposition method to obtain a second composite.

14. A negative electrode active material, which comprises the silicon-carbon mixture of claim 1.

15. A lithium secondary battery, which comprises the negative electrode active material of claim 14.

## INTERNATIONAL SEARCH REPORT

| International application No. |
| --- |
| **PCT/KR2023/002329** |

### A. CLASSIFICATION OF SUBJECT MATTER

**H01M 4/36**(2006.01)i; **H01M 4/133**(2010.01)i; **H01M 4/134**(2010.01)i; **H01M 4/583**(2010.01)i; **H01M 4/587**(2010.01)i; **H01M 4/48**(2010.01)i; **H01M 4/46**(2006.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/36(2006.01); H01M 10/052(2010.01); H01M 10/0525(2010.01); H01M 4/131(2010.01); H01M 4/1315(2010.01); H01M 4/134(2010.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 활물질(cathode active material), 규소-탄소 혼합체(silicon-carbon mixture), 식각(etching), 마그네슘(magnesium)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2013-041826 A (SAMSUNG SDI CO., LTD.) 28 February 2013 (2013-02-28)<br>See paragraphs [0023]-[0024] and [0059]; and claim 14. | 1-15 |
| DY | KR 10-2018-0106485 A (DAE JOO ELECTRONIC MATERIALS CO., LTD.) 01 October 2018 (2018-10-01)<br>See paragraph [0119]; and claim 1. | 1-15 |
| Y | KR 10-2014-0026855 A (SAMSUNG SDI CO., LTD.) 06 March 2014 (2014-03-06)<br>See paragraphs [0022]-[0023], [0029], [0031] and [0060]. | 12-13 |
| A | KR 10-2017-0036381 A (LG CHEM, LTD.) 03 April 2017 (2017-04-03)<br>See entire document. | 1-15 |
| A | KR 10-2014-0141488 A (LG CHEM, LTD.) 10 December 2014 (2014-12-10)<br>See entire document. | 1-15 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 May 2023** | **16 May 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/002329**

| Patent document cited in search report | | | Publication date (day/month/year) | Patent family member(s) | | | Publication date (day/month/year) |
|---|---|---|---|---|---|---|---|
| JP | 2013-041826 | A | 28 February 2013 | CN | 102956877 | A | 06 March 2013 |
| | | | | CN | 102956877 | B | 18 May 2016 |
| | | | | EP | 2559660 | A1 | 20 February 2013 |
| | | | | EP | 2559660 | B1 | 03 August 2016 |
| | | | | JP | 6366160 | B2 | 01 August 2018 |
| | | | | KR | 10-1711985 | B1 | 06 March 2017 |
| | | | | KR | 10-2013-0018498 | A | 25 February 2013 |
| | | | | US | 2013-0045419 | A1 | 21 February 2013 |
| KR | 10-2018-0106485 | A | 01 October 2018 | CN | 108630887 | A | 09 October 2018 |
| | | | | CN | 108630887 | B | 09 July 2021 |
| | | | | CN | 113410446 | A | 17 September 2021 |
| | | | | EP | 3379611 | A1 | 26 September 2018 |
| | | | | EP | 3379611 | B1 | 04 November 2020 |
| | | | | JP | 2018-156922 | A | 04 October 2018 |
| | | | | JP | 6306767 | B1 | 04 April 2018 |
| | | | | KR | 10-1960855 | B1 | 21 March 2019 |
| | | | | KR | 10-1999191 | B1 | 11 July 2019 |
| | | | | US | 11043668 | B2 | 22 June 2021 |
| | | | | US | 2018-0269475 | A1 | 20 September 2018 |
| KR | 10-2014-0026855 | A | 06 March 2014 | KR | 10-1724012 | B1 | 07 April 2017 |
| | | | | US | 2014-0057176 | A1 | 27 February 2014 |
| | | | | US | 9088045 | B2 | 21 July 2015 |
| KR | 10-2017-0036381 | A | 03 April 2017 | CN | 107636867 | A | 26 January 2018 |
| | | | | CN | 107636867 | B | 02 April 2021 |
| | | | | EP | 3355389 | A1 | 01 August 2018 |
| | | | | EP | 3355389 | A4 | 01 August 2018 |
| | | | | EP | 3355389 | B1 | 30 December 2020 |
| | | | | JP | 2018-523898 | A | 23 August 2018 |
| | | | | JP | 6727667 | B2 | 22 July 2020 |
| | | | | KR | 10-1981609 | B1 | 24 May 2019 |
| | | | | US | 2018-0151874 | A1 | 31 May 2018 |
| | | | | US | 2022-0255069 | A1 | 11 August 2022 |
| | | | | WO | 2017-052281 | A1 | 30 March 2017 |
| KR | 10-2014-0141488 | A | 10 December 2014 | CN | 104662715 | A | 27 May 2015 |
| | | | | CN | 104662715 | B | 28 September 2018 |
| | | | | EP | 2863455 | A1 | 22 April 2015 |
| | | | | EP | 2863455 | A4 | 01 July 2015 |
| | | | | EP | 2863455 | B1 | 31 July 2019 |
| | | | | JP | 2015-524993 | A | 27 August 2015 |
| | | | | JP | 6448057 | B2 | 09 January 2019 |
| | | | | KR | 10-1588954 | B1 | 26 January 2016 |
| | | | | US | 2014-0377643 | A1 | 25 December 2014 |
| | | | | US | 9843034 | B2 | 12 December 2017 |
| | | | | WO | 2014-193124 | A1 | 04 December 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4393610 B
- JP 2016502253 A
- KR 20180106485